# FASCICULE DE BREVET EUROPEEN

(11) **EP 4 295 376 B1**
(45) Date de publication et mention de la délivrance du brevet: **02.04.2025**
(21) Numéro de dépôt: 22708997.6
(22) Date de dépôt: 15.02.2022
(51) Int. Cl.: G21C 1/22, G21C 13/10, G21C 15/02, G21C 15/28

(54) **RÉACTEUR DE FISSION À SELS FONDUS ET À ÉCHANGEUR PRIMAIRE INTÉGRÉ, ET ÉLECTROGÉNÉRATEUR COMPRENANT UN TEL RÉACTEUR**
SALZSCHMELZESPALTREAKTOR MIT INTEGRIERTEM PRIMÄRWÄRMETAUSCHER UND ELEKTROGENERATOR MIT SOLCH EINEM REAKTOR
MOLTEN SALT FISSION REACTOR WITH INTEGRATED PRIMARY HEAT EXCHANGER, AND ELECTRIC GENERATOR COMPRISING SUCH A REACTOR

(30) Priorité: 16.02.2021 FR 2101490
(43) Date de publication de la demande: 27.12.2023
(73) Titulaire: Naarea, 92000 Nanterre (FR)
(72) Inventeur: ALEXANDRE, Jean-Luc, 78240 Aigremont (FR)
(74) Mandataire: Santarelli
(86) Numéro de dépôt international: PCT/FR2022/050270
(87) Numéro de publication internationale: WO 2022/175624

(56) Documents cités:
- EP-A1- 2 427 886
- EP-B1- 2 427 886
- WO-A1-2015/089665
- WO-A2-2012/145855
- US-A1- 2014 348 287

## Description

La présente demande concerne un réacteur de fission nucléaire à sels fondus du type à échangeur primaire intégré, ainsi qu'un électrogénérateur comprenant un tel réacteur.

Un réacteur de fission nucléaire à sels fondus comprend usuellement, d'une part un cœur de réacteur dans lequel un sel combustible subit des réactions de fission nucléaire auto-entretenues, et d'autre part un échangeur primaire de chaleur dans lequel le sel combustible chaud cède de la chaleur à un sel caloporteur.

Dans toute la description le terme « sel combustible » désigne une composition comprenant :
- au moins un sel porteur, par exemple un fluorure tel que LiF, BeF₂ ou NaF ou un chlorure, lequel sel porteur est à l'état solide (cristaux) à température ambiante mais devient liquide au-delà d'une certaine température qui va permettre le démarrage du réacteur, et
- un combustible à base de noyaux lourds comprenant des isotopes fissibles ou fissiles, par exemple de l'Uranium 233 et/ou de l'uranium 235 et/ou du Plutonium 239 ou un mélange de ceux-ci.

En d'autres termes, l'expression « sel combustible » ne désigne pas seulement un ou des sels mais l'ensemble de la composition combustible.

Les termes « sel caloporteur » désignent une composition comprenant au moins un sel, par exemple un chlorure ou un fluorure, laquelle composition est susceptible d'emmagasiner de la chaleur, est dépourvue de noyaux lourds fissibles ou fissiles et de matériaux radioactifs, se trouve à l'état solide (cristaux) à température ambiante et devient liquide au-delà d'une certaine température. Là encore, l'expression « sel caloporteur » ne désigne pas seulement le ou les sels au sens strict mais l'ensemble de la composition calorifique qui est utilisée dans l'échangeur primaire de chaleur.

Dans la plupart des réacteurs à sels fondus connus, le cœur est enfermé dans une enceinte réflectrice apte à réfléchir les neutrons générés par la fission nucléaire ; l'échangeur primaire de chaleur est agencé à l'extérieur de cette enceinte réflectrice et dispose de sa propre enceinte ; le sel combustible est pompé depuis le cœur vers l'échangeur par une pompe agencée à l'extérieur de l'enceinte réflectrice du cœur. L'ensemble de ces éléments est réuni dans une cuve de réacteur.

Un tel réacteur présente un encombrement important. Afin de réduire ce dernier, des réacteurs à échangeur primaire intégré sont apparus, tel celui divulgué par WO2015017928. Dans ce réacteur, le cœur est contenu dans une jupe de réacteur réflectrice, elle-même contenue dans une cuve principale. La jupe de réacteur présente une portion cylindrique de section circulaire enfermant le cœur du réacteur, surmontée d'une calotte réflectrice et d'un conduit central traversant la calotte réflectrice.

Dans ce réacteur antérieur connu, le cœur de réacteur est rempli d'une structure modératrice en graphite dans laquelle sont ménagés des canaux pour la circulation du sel combustible.

Par ailleurs, l'échangeur de chaleur primaire est agencé dans la cuve principale au-dessus du cœur. L'échangeur comprend un conduit d'entrée qui entre dans la cuve principale, une pluralité de tubulures agencées autour du conduit central de la jupe de réacteur, lesquelles tubulures baignent dans le sel combustible et sont alimentées en sel caloporteur par le conduit d'entrée, et un conduit de sortie par lequel le sel caloporteur réchauffé par le sel combustible dans l'échangeur ressort de la cuve principale.

Le cœur du réacteur, matérialisé par la structure modératrice, dans laquelle se déroule la fission nucléaire des noyaux lourds du sel combustible, est séparé de l'échangeur primaire par le conduit central et par la calotte réflectrice surmontant le cœur.

Le logement de l'échangeur de chaleur dans la cuve principale au-dessus du cœur a permis de réduire l'encombrement du réacteur et de supprimer un certain nombre de circuits, vannes et pompes nécessaires au fonctionnement de l'échangeur primaire de chaleur, réduisant ainsi les risques de pannes et de dysfonctionnements. Mais les réacteurs à sels fondus connus restent encombrants, notamment en raison du fait qu'ils doivent fonctionner bien au-delà de la masse critique du sel combustible.

En outre, l'utilisation de barres de contrôle reste nécessaire pour éviter tout risque d'échauffement du cœur. Ces barres de contrôle sont montées coulissantes selon la direction longitudinale du réacteur de façon à pouvoir être plus ou moins immergées dans le cœur du réacteur. Elles permettent, en combinaison avec la structure modératrice en graphite et selon la longueur de barre de contrôle immergée, de contrôler la température du sel combustible et la vitesse des neutrons générés par la fission.

Le contrôle du réacteur avec de telles barres de contrôle est particulièrement délicat. De surcroît, la présence des barres de contrôle, qui doivent pouvoir être déplacées entre une position quasiment entièrement immergée et une position quasiment entièrement retirée du cœur, augmente considérablement la hauteur et l'encombrement des réacteurs connus.

Enfin, la structure modératrice en graphite présente un inconvénient supplémentaire, qui limite la durée de vie du réacteur : le graphite s'use et s'effrite à la longue et des particules de graphite peuvent se mêler au sel combustible, déstabilisant l'équilibre neutronique du cœur et/ou modifiant sa température.

Un circuit de refroidissement de secours est dès lors prévu dans les réacteurs antérieurs connus, qui non seulement ajoute à l'encombrement des réacteurs ainsi qu'aux risques de pannes, mais de plus vient grever les coûts de fabrication et de maintenance des réacteurs.

WO2010/129836 décrit un réacteur de fission nucléaire qui comprend une matrice parallélépipédique faisant office de cœur de réacteur et d'échangeur primaire de chaleur. La matrice baigne dans une piscine de sel fertile servant à la fois de modérateur (pour un fonctionnement en spectre thermique), de sel caloporteur et de vecteur de noyaux à fertiliser. La matrice comprend des canaux de sel combustible, fermés au sel fertile caloporteur et parcourus par un sel combustible, et des canaux s'ouvrant sur la piscine, parcourus par le sel fertile caloporteur. Le sel combustible traverse les canaux de la matrice du bas vers le haut, depuis la face inférieure de la matrice jusqu'à sa face supérieure, puis est reconduit jusqu'à la face inférieure par l'extérieur de la matrice par un ensemble de tuyaux et pompes plongés dans la piscine.

Comparé au réacteur de WO2015017928, la matrice proposée par WO2010/129836 permet de réduire l'encombrement du réacteur en combinant cœur de réacteur et échangeur primaire de chaleur. Mais les risques de pannes et de dysfonctionnements liés au grand nombre de tuyaux et pompes extérieurs à la matrice restent présents, ces tuyaux et pompes venant de surcroît contrebalancer le gain d'encombrement conféré par la matrice. En outre, la présence de ces tuyaux et pompes dans le circuit de sel combustible oblige à prévoir une masse de sel combustible bien supérieure à la masse critique du sel combustible, ce qui limite encore le gain possible en termes d'encombrement. De plus, le réacteur fonctionnant en spectre thermique, il est nécessaire de prévoir des moyens de régulation (piscine de sel fertile caloporteur, éventuellement complétée par des barres de contrôle) ainsi qu'un réservoir d'évacuation d'urgence, de même qu'un circuit de retraitement et régénération du sel combustible.

US2014/0348287 propose un autre type de réacteur de fission comprenant un serpentin parcouru par un sel combustible, plongé dans une cuve de plomb liquide pour son refroidissement.

L'invention vise à pallier au moins l'un des inconvénients précités, en proposant un réacteur à sels fondus incroyablement compact, à la durée de vie augmentée et garantie, et à la sécurité accrue.

Pour ce faire, l'invention propose un réacteur de fission nucléaire à sels fondus comprenant :
- un cœur de réacteur parcouru par un sel combustible comprenant des noyaux lourds susceptibles de fissionner,
- une enceinte primaire contenant le cœur de réacteur, laquelle enceinte primaire est étanche aux sels liquides,
- un sarcophage dans lequel est logé l'enceinte primaire,
- le cœur de réacteur comprenant une matrice parallélépipédique comprenant une alternance de couches (ou plaques) de canaux de sel combustible, dans lesquels circule le sel combustible, et de couches (ou plaques) de canaux de sel caloporteur, dans lesquels circule un sel caloporteur ; la matrice forme donc à la fois le cœur du réacteur, défini comme étant le volume dans lequel la fission a lieu, et un échangeur de chaleur primaire,
- des moyens de circulation du sel caloporteur pour faire circuler le sel caloporteur au sein de l'enceinte primaire entre un orifice d'entrée en sel caloporteur de l'enceinte primaire, les canaux de sel caloporteur de la matrice, puis un orifice de sortie en sel caloporteur de l'enceinte primaire,
- des moyens de circulation du sel combustible pour faire circuler le sel combustible dans les canaux de sel combustible de la matrice.
le réacteur selon l'invention est caractérisé en ce que les moyens de circulation du sel combustible sont configurés pour extraire le sel combustible d'une partie des canaux de sel combustible par une face de la matrice et pour propulser le sel combustible dans l'autre partie des canaux de sel combustible par cette même face de la matrice.

Autrement dit, étant précisé que chaque canal de sel combustible possède une extrémité d'entrée et une extrémité de sortie, tous les canaux de sel combustible ont leur orifice d'entrée et/ou leur orifice de sortie (c'est-à-dire soit leur orifice d'entrée, soit leur orifice de sortie, soit les deux) situés sur une même face de la matrice.

Le sel combustible sort de la matrice d'un côté de la matrice et rentre de nouveau dans la matrice du même côté de celle-ci ; les moyens de circulation du sel combustible ne conduisent pas le sel combustible d'un côté à l'autre de la matrice en dehors de celle-ci (contrairement à ce qui proposé par WO2010/129836).

Ceci permet de réduire considérablement la masse de sel combustible nécessaire au fonctionnement du réacteur et de proposer ainsi un réacteur particulièrement compact, de petite taille et de faible puissance. A noter que la forme parallélépipédique de la matrice (c'est-à-dire du cœur de réacteur) contribue aussi à la compacité et au rendement du réacteur.

Les dimensions de l'enceinte primaire peuvent dès lors être réduites au maximum. Comme on verra plus loin, les parois de l'enceinte primaire peuvent même être accolées à la matrice sur au moins deux des faces de cette dernière. En effet, selon les modes de réalisation, seul(s) un volume au-dessus de la matrice, et éventuellement un volume en-dessous de la matrice, est ou sont prévu(s) entre la matrice et l'enceinte primaire pour les besoins de la circulation du sel combustible, et seul(s) un volume latéral d'un côté de la matrice, et éventuellement un volume latéral du côté opposé à la matrice, est ou sont prévu(s) entre la matrice et l'enceinte primaire pour les besoins de la circulation du sel caloporteur.

L'objectif est ici de proposer un réacteur dont l'encombrement ne dépasse pas quelques m³ (il peut même être de l'ordre de 1 m³) et dont la puissance est de l'ordre de quelques mégawatts alors que les réacteurs connus rivalisent de gigantisme et de puissance. A titre de comparaison, WO2010/129836 propose un réacteur dimensionné pour délivrer une puissance de 400 MW et dont la matrice seule mesure plus de 2,40m de côté.

Aucun dispositif modérateur (ni barre de contrôle ou autre structure modératrice en graphite, ni piscine de sel liquide ou plomb liquide, etc.) n'est prévu dans le cœur, qui fonctionne en spectre rapide, ce qui signifie que les neutrons générés par la fission nucléaire du sel combustible ne sont pas ralentis dans la matrice.

Selon une caractéristique possible de l'invention, les moyens de circulation du sel combustible sont configurés pour faire circuler le sel combustible uniquement à l'intérieur de l'enceinte primaire, en cycle fermé sans régénération du sel combustible, l'enceinte primaire étant dépourvue d'orifice de sortie du sel combustible.

Selon une caractéristique possible de l'invention, le sarcophage comprend au moins :
- une couche réflectrice en un matériau carboné, orientée vers le cœur de réacteur et configurée pour rendre le sel combustible critique,
- une couche de blindage pour l'abattement des rayonnements et neutrons résiduels, configurée pour absorber ou neutraliser les rayonnements gammas issus du cœur du réacteur et/ou de la couche réflectrice ainsi que les neutrons de fuite s'échappant de l'enceinte primaire qui parviendraient à traverser la couche réflectrice du sarcophage.

Concernant la couche réflectrice carbonée du sarcophage, l'homme du métier est à même de définir, à l'aide d'un simulateur de code neutronique usuel, en fonction de la composition exacte du sel combustible et du matériau carboné choisi pour réaliser la couche réflectrice, l'épaisseur de couche qui permet de garantir la criticité. Ainsi par exemple, la couche réflectrice peut être en graphite et présenter une épaisseur comprise entre 15 à 30 cm. Afin d'augmenter la durée de vie du réacteur en évitant une surconsommation de sel combustible, la couche réflectrice comprend de préférence non seulement une masse de graphite mais aussi des aiguilles de bore.

De même l'homme du métier est à même de dimensionner la couche de blindage de façon à ce qu'elle capture tous les rayonnements émis par le sel combustible en fission dans le cœur du réacteur et par les neutrons réfléchis ou ralentis par la couche réflectrice ainsi que les éventuels neutrons résiduels parvenant à traverser la couche réflectrice du sarcophage. Une épaisseur de 5 à 20 cm de plomb convient pour réaliser cette couche de blindage.

Selon une caractéristique possible de l'invention, les canaux de sel combustible s'étendent tous, dans les couches de canaux de sel combustible, selon la direction verticale (ils s'étendent donc selon une direction qui est orthogonale aux faces supérieure et inférieure de la matrice), et les canaux de sel caloporteur s'étendent tous, dans les couches de canaux de sel caloporteur, selon une direction horizontale orthogonale à l'une, première, des faces latérales de la matrice. La matrice étant parallélépipédique la direction des canaux de sel caloporteur est également orthogonale à la face latérale de la matrice, ci-après nommée deuxième face latérale, qui est opposée à la première face latérale susmentionnée.

De préférence dans ce cas, les moyens de circulation du sel combustible comprennent :
- un élément, dit collecteur central, comprenant d'un côté une grande base adjacente à la face supérieure de la matrice, laquelle grande base recouvre une partie ou tranche centrale de ladite face supérieure, et d'un autre côté une ouverture sommitale, une face interne en forme de trémie pyramidale reliant la grande base à l'ouverture sommitale,
- et une pompe centrifuge agencée en regard, au-dessus, de l'ouverture sommitale du collecteur central.

Avantageusement, le collecteur central et la pompe centrifuge sont intégrés dans l'enceinte primaire. Ainsi, le sel combustible ne sort pas de l'enceinte primaire. A noter que la motorisation et l'électronique de contrôle associés à la pompe centrifuge pour son fonctionnement sont en revanche agencés à l'extérieur de l'enceinte primaire, et de préférence à l'extérieur de la couche réflectrice du sarcophage, voire à l'extérieur du sarcophage.

Selon une caractéristique possible de l'invention, au moins une partie des moyens de circulation du sel caloporteur sont agencés à l'intérieur de l'enceinte primaire.

Selon une caractéristique possible de l'invention, les moyens de circulation du sel caloporteur comprennent eux aussi un collecteur intégré dans l'enceinte primaire, le collecteur ayant d'un côté une grande base adjacente à la première face latérale de la matrice et d'un autre côté (qui peut être le côté opposé à la grande base ou un côté adjacent à celle-ci) au moins une ouverture reliée soit à l'orifice d'entrée en sel caloporteur de l'enceinte primaire, soit à l'orifice de sortie en sel caloporteur de l'enceinte primaire.

Ils comprennent de plus au moins une pompe qui, en revanche, est de préférence agencée à l'extérieur de l'enceinte primaire, voire à l'extérieur du sarcophage ou à tout le moins à l'extérieur de la couche réflectrice dudit sarcophage.

Pour des raisons de sécurité, une deuxième pompe peut être prévue afin d'assurer une redondance en cas de panne de la première pompe et garantir ainsi la circulation du sel caloporteur. Cette deuxième pompe est aussi de préférence agencée à l'extérieur de l'enceinte primaire ou de la couche réflectrice du sarcophage.

Selon une caractéristique possible de l'invention, la matrice est monobloc. Ceci permet de garantir une parfaite étanchéité entre les couches de canaux de sel combustible et les couches de canaux de sel caloporteur afin d'éviter que du sel combustible radioactif ne se mêle au sel caloporteur et ne sorte ainsi du cœur du réacteur.

Selon une caractéristique possible de l'invention, la matrice est en un ou plusieurs matériaux choisis parmi : le graphène, les mousses de carbure de silicium (SiC), les mousses de graphène et carbure de silicium (ci-après notées mousse de graphène/SiC) et des combinaisons des matériaux précédents. Il peut, par exemple, être prévu de réaliser la matrice en mousse de graphène/SiC, en recouvrant d'une feuille de graphène les faces de chaque couche de sel combustible afin d'étanchéifier lesdites couches.

De préférence, le collecteur central de sel combustible et la pompe centrifuge, ou plus généralement les moyens de circulations du sel combustible, sont également en graphène.

L'utilisation du graphène présente de multiples avantages : ce matériau est imprimable en 3D ; c'est un excellent conducteur thermique, ce qui a son importance puisque la matrice est non seulement le cœur du réacteur mais aussi l'échangeur de chaleur primaire du réacteur ; il est extrêmement résistant au plan mécanique ; en outre, contrairement au graphite, il ne s'effrite pas et présente une grande résistance à l'usure. Les mousses de carbure SiC et les mousses de graphène et SiC présentent les mêmes avantages, auxquels s'ajoute une masse volumique moindre.

Selon une caractéristique possible de l'invention, la matrice est obtenue par impression 3D, l'expression « impression 3D » englobant toute technique de fabrication additive. Ce procédé de fabrication est particulièrement adapté à la forme et à l'architecture de la matrice ; il permet d'obtenir très facilement et à partir d'un seul matériau la structure en millefeuille et aux multiples canaux de cette dernière, sans qu'aucun joint ni matériau adhésif ou pièce de fixation ne soit nécessaire pour l'assemblage des différentes couches de la matrice.

En d'autres termes, l'impression 3D permet d'obtenir une matrice monobloc. L'invention n'est pas limitée à l'utilisation de l'impression 3D, d'autres procédés pouvant être utilisés y compris pour obtenir une matrice monobloc (par exemple, dans le cas d'une matrice à canaux traversants, ceux-ci peuvent être obtenus par perçage d'un bloc de matériau carboné).

Selon une caractéristique possible de l'invention, outre sa couche réflectrice et sa couche externe de blindage, le sarcophage comprend une couche de thorium, qui va être fertilisée (transformée en U-233) par absorption des neutrons de fuite s'échappant de l'enceinte primaire. Cette couche de thorium est avantageusement prévue entre la couche réflectrice et la couche de blindage afin que les neutrons de fuite soient ralentis par la couche réflectrice et pénètrent la couche de thorium en spectre thermique.

Selon une caractéristique possible de l'invention, une cavité supérieure est prévue entre la face supérieure de la matrice et la paroi supérieure de l'enceinte primaire d'une part pour loger les moyens de circulation du sel combustible et assurer l'homogénéisation dudit sel, et d'autre part pour accueillir un ciel gazeux, et le réacteur comprend de plus un réservoir de récupération de produits de fission gazeux, connecté au ciel gazeux, afin de récupérer des produits de fission gazeux, en particulier xénon et/ou krypton.

Comme déjà évoqué plus haut, les autres produits de fission ne sont ni récupérés ni retraités au cours d'un cycle d'utilisation du réacteur. Le réacteur est avantageusement dimensionné pour qu'un tel cycle dure dix à quinze ans. Le sel combustible est entièrement vidangé et renouvelé à l'issue de chaque cycle.

Selon une caractéristique possible de l'invention, le réacteur comprend de plus un réservoir tampon de gaz neutre et des moyens d'injection dudit gaz neutre dans le ciel gazeux aux fins de compensation de variations de volume du sel combustible.

Le sel combustible subit en effet des variations de volume importantes pouvant aller jusqu'à 25%, qu'il y a lieu de compenser :
- lorsque le volume du sel combustible diminue, par injection de gaz neutre dans la l'enceinte primaire dans le ciel gazeux afin d'éviter tout phénomène de cavitation,
- lorsque le volume du sel combustible augmente, par récupération des produits gazeux de fission accumulés dans le ciel gazeux.

Selon une caractéristique possible de l'invention, un système de préchauffage par traçage est prévu dans les moyens de circulation du sel caloporteur. Ce système de préchauffage permet d'élever la température du sel caloporteur jusqu'à sa température de fusion (par exemple de l'ordre de 450°C) afin de démarrer le réacteur.

A noter que la température de fusion du sel combustible et du sel caloporteur dans le cœur est en revanche atteinte dès lors que la matrice chargée en sel combustible et logée dans l'enceinte primaire est intégrée dans le sarcophage.

Selon une caractéristique possible de l'invention, le réacteur comprend un dispositif de contrôle du débit (ou de la vitesse) d'extraction/d'injection du sel caloporteur de/dans l'enceinte primaire, c'est-à-dire un dispositif de contrôle du débit (ou de la vitesse) de circulation du sel caloporteur dans le réacteur. Ce dispositif permet, à lui seul, de contrôler la température du réacteur et la réaction de fission.

Dans un réacteur selon l'invention, il n'est pas nécessaire de prévoir de structure modératrice dans le cœur de réacteur, ni de barre de contrôle, ni de système de refroidissement, d'une part parce que le réacteur est par conception apte à se stabiliser de lui-même et d'autre part parce que le contrôle du débit de circulation du sel caloporteur permet de faire varier de façon active la température du cœur.

En effet, concernant la tendance du réacteur à s'auto-stabiliser, lors d'une augmentation de réactivité, la température s'élève. La forte dilatation thermique du combustible, due à sa nature de sel liquide, le pousse en dehors de la région active du cœur lorsqu'il surchauffe, diminuant ainsi sa densité dans la région active du cœur, et réduisant la réactivité dans le volume de la zone critique de fission. La température descend aussitôt. A l'inverse lorsque le sel combustible refroidit, sa densité au cœur s'accroit, la probabilité de fission augmente, tout comme sa capacité à générer de la chaleur. Ces deux effets donnent au réacteur son caractère de stabilité inhérente, et lui permettent de suivre la demande de puissance demandée par l'aval (extraction de chaleur par l'échangeur primaire). La température d'équilibre au cœur du réacteur est d'environ 700°C.

Dès lors, la température du cœur, et donc la puissance thermique produite par le réacteur, sont uniquement régulées par le contrôle du débit d'extraction du sel caloporteur.

Selon une caractéristique possible de l'invention, le sel combustible comprend au moins un sel porteur choisi parmi des chlorures dont le chlorure de sodium (NaCl) et des fluorures.

Selon une caractéristique possible de l'invention, le sel caloporteur comprend au moins un sel choisi parmi des chlorures dont le chlorure de sodium (NaCl) et des fluorures. Ce sel peut être le même que le sel porteur du sel combustible.

Comme évoqué plus haut, la matrice selon l'invention et les moyens de circulation du sel combustible qui lui sont associés sont particulièrement adaptés à la réalisation d'un réacteur de petites dimensions, dont la matrice cubique peut par exemple mesurer de 35 cm à 120 cm de côté, et/ou dont le volume de sel combustible à l'état liquide est inférieur à 500 litres.

Un tel réacteur peut être qualifié de « réacteur miniature » (notamment lorsque les côtés de la matrice mesurent de l'ordre de 40 cm) ou de « petit réacteur » (notamment lorsque les côtés de la matrice mesurent de l'ordre de 100 cm) par comparaison aux réacteurs à sels fondus connus, qui présentent des dimensions très largement supérieures à celles susmentionnées. Les inventeurs ont constaté avec surprise que la combinaison des faibles dimensions de la matrice, de l'architecture originale de la matrice (millefeuille parallélépipédique) et des moyens de circulation du sel combustible, et de la circulation en boucle fermée du sel combustible à l'intérieur de la matrice (sans sortir de celle-ci sauf dans un faible volume du côté de la face supérieure de la matrice où sont logés les moyens de circulation du sel combustible) conduit à l'obtention d'un réacteur au fonctionnement sans faille malgré une quantité de sel combustible proche de la masse critique. De surcroît, le rendement obtenu est excellent et supérieur aux rendements des réacteurs connus.

Par ailleurs, les inventeurs ont également découvert que le réacteur selon l'invention pouvait fonctionner avec un sel combustible qui contient essentiellement, en tant que matériau à l'origine de la fission dans le cœur du réacteur, des sous-produits (ou matières radioactives usagées) de centrales nucléaires classiques tels que du plutonium à faible teneur en isotope fissile, de l'uranium à faible teneur en isotope fissile (l'uranium appauvri est presque exempt de son isotope naturel U-235) et/ou des actinides mineurs (neptunium-237, américium-241 et 243 et curium-244 et 245), seule une quantité très faible d'uranium 235 ou 233 et/ou de plutonium 239 étant nécessaire dans un premier temps.

Le réacteur selon l'invention peut ainsi servir d'incinérateur de sous-produits (ou matières radioactives usagées) de l'industrie nucléaire tout en produisant de l'énergie. Puisque le réacteur fonctionne en spectre rapide dans la matrice, ces sous-produits (ou matières radioactives usagées) sont littéralement pulvérisés et rendus inoffensifs.

Concernant la forme des canaux de sel combustible, deux variantes sont envisagées. Dans une première variante :
- les canaux de sel combustible sont rectilignes et traversants, s'étendant de la face supérieure de la matrice à sa face inférieure,
- une cavité supérieure est prévu entre la face supérieure de la matrice et la paroi supérieure de l'enceinte primaire pour loger les moyens de circulation du sel combustible à l'exception des éléments de motorisation et de commande desdits moyens,
- une cavité inférieure est prévue entre la face inférieure de la matrice et la paroi inférieure de l'enceinte primaire pour la circulation du sel combustible,
- les moyens de circulation du sel combustible comprennent, du côté de la face supérieure de la matrice,
   - un collecteur central ayant une grande base, une face interne en forme de trémie pyramidale et une ouverture sommitale, la grande base ne recouvrant qu'une partie centrale ou une tranche centrale de la face supérieure de la matrice (c'est-à-dire ne couvrant qu'une partie des canaux, les canaux débouchant en regard du collecteur étant ci-après dits « canaux centraux » tandis que les canaux ne débouchant pas en regard du collecteur sont dits « canaux périphériques »),
   - et une pompe centrifuge configurée pour projeter le sel combustible issu de du collecteur central vers la partie périphérique ou les tranches périphériques de la face supérieure de la matrice.

Ainsi, le sel combustible est aspiré dans les canaux centraux par le collecteur central et la pompe centrifuge de sorte qu'il circule depuis la face inférieure de la matrice vers la face supérieure de celle-ci dans les canaux centraux, puis il est projeté vers les canaux périphériques dans lesquels il circule dans le sens contraire, c'est-à-dire depuis la face supérieure vers la face inférieure de la matrice. Les canaux centraux ont donc leur extrémité de sortie du côté de la face supérieure de la matrice et leur extrémité d'entrée du côté de la face inférieure de la matrice, tandis que les canaux périphériques ont leur extrémité d'entrée du côté de la supérieure face de la matrice et leur extrémité de sortie du côté de la face inférieure de la matrice.

Dans la seconde variante envisagée pour les canaux de sel combustible :
- les canaux de sel combustible sont des canaux en U, les extrémités d'entrée et de sortie de chaque canal de sel combustible étant toutes deux situées sur la face supérieure de la matrice,
- une cavité supérieure est prévu entre la face supérieure de la matrice et la paroi supérieure de l'enceinte primaire pour loger les moyens de circulation du sel combustible à l'exception des éléments de motorisation et de commande desdits moyens et assurer l'homogénéisation du sel combustible.

Contrairement à la première variante, la face inférieure de la matrice peut reposer sur la paroi inférieure de l'enceinte primaire.

Dans cette seconde variante, on peut prévoir que :
- chaque couche de canaux de sel combustible comprend deux canaux en U de sel combustible agencés de façon symétrique de part et d'autre d'un axe central de ladite couche, chaque canal de sel combustible en U ayant une extrémité de sortie située dans une tranche centrale de la face supérieure de la matrice et une extrémité d'entrée située dans une tranche périphérique de ladite face supérieure (la face supérieure de la matrice est ainsi « divisée » en une tranche centrale rectangulaire regroupant les extrémités de sortie de tous les canaux en U et deux tranches périphériques rectangulaires s'étendant de part et d'autre de la tranche centrale et regroupant les extrémités d'entrée de tous les canaux en U) ;
- à l'instar de la première variante, les moyens de circulation du sel combustible comprennent avantageusement, du côté de la face supérieure de la matrice,
   - d'une part un collecteur central avec une grande base, une face interne en forme de trémie pyramidale et une ouverture sommitale, la grande base ne recouvrant que la tranche centrale de la face supérieure de la matrice
   - et d'autre part une pompe centrifuge configurée pour projeter le sel combustible issu de l'ouverture sommitale du collecteur central vers les deux tranches périphériques de la face supérieure de la matrice.

De façon similaire, deux variantes sont envisagées pour les canaux de sel caloporteur : dans une première variante, les canaux de sel caloporteur sont rectilignes traversants et dans une deuxième variante, les canaux de sel caloporteur sont des canaux en U.

Plus précisément, dans la première variante :
- les canaux de sel caloporteur sont rectilignes et traversants, s'étendant de l'une, première, des faces latérales de la matrice, jusqu'à sa face latérale opposée, dite deuxième face latérale, tous les canaux de sel caloporteur ayant une extrémité d'entrée du côté de la première face latérale de la matrice et une extrémité de sortie du côté de la deuxième face latérale de la matrice,
- une cavité de brassage amont est prévue entre la première face latérale de la matrice et la première paroi latérale de l'enceinte primaire, la « première paroi latérale de l'enceinte primaire » désignant la paroi de ladite enceinte qui longe la première face latérale de la matrice,
- une cavité de brassage aval est prévue entre la deuxième face latérale de la matrice et la deuxième paroi latérale de l'enceinte primaire, la « deuxième paroi latérale de l'enceinte primaire » désignant la paroi de ladite enceinte qui longe la deuxième face latérale de la matrice,
- l'orifice d'entrée en sel caloporteur de l'enceinte primaire débouche dans la cavité de brassage amont (il est par exemple ménagé dans la première paroi latérale de l'enceinte primaire), tandis que l'orifice de sortie en sel caloporteur de l'enceinte primaire débouche dans la cavité de brassage aval (il est par exemple ménagé dans la deuxième paroi latérale de l'enceinte primaire),
- les moyens de circulation du sel caloporteur comprennent au moins une pompe extérieure à l'enceinte primaire, de préférence extérieure à la couche réflectrice du sarcophage, voire extérieure au sarcophage, configurée pour injecter le sel caloporteur dans la cavité de brassage amont par l'orifice d'entrée en sel caloporteur de l'enceinte primaire, ou pour extraire le sel caloporteur de la cavité de brassage aval par l'orifice de sortie en sel caloporteur de l'enceinte primaire.

Dans la deuxième variante relative à la forme des canaux de sel caloporteur :
- les canaux de sel caloporteur sont des canaux en U, chaque canal de sel caloporteur en U ayant une extrémité d'entrée et une extrémité de sortie toutes deux situées sur la première face latérale de la matrice,
- une unique cavité latérale est prévue, entre la première face latérale de la matrice et la première paroi latérale de l'enceinte primaire,
- l'orifice d'entrée en sel caloporteur et l'orifice de sortie en sel caloporteur de l'enceinte primaire sont tous deux prévus pour déboucher dans l'unique cavité latérale ; ils sont par exemple ménagés dans la première paroi latérale de l'enceinte primaire, ou dans une face adjacente à celle-ci à proximité de ladite première face de façon à déboucher dans l'unique cavité latérale.

De préférence :
- chaque couche de canaux de sel caloporteur comprend deux canaux de sel caloporteur en U agencés de façon symétrique de part et d'autre d'un axe central de ladite couche, chaque canal ayant l'une de ses extrémités située dans une tranche centrale de la première face latérale de la matrice et son autre extrémité située dans une tranche périphérique de ladite première face latérale (en d'autres termes, la première face latérale de la matrice est « divisée » en trois parties rectangulaires, à savoir une tranche centrale regroupant l'une des extrémités -par exemple l'extrémité de sortie- des canaux en U et deux tranches périphériques regroupant l'autre extrémité -par exemple l'extrémité d'entrée- des canaux en U).

En résumé concernant la forme des canaux, quatre modes de réalisation principaux peuvent finalement être envisagés :
- un premier mode de réalisation dans lequel les canaux de sel combustible et les canaux de sel caloporteur sont des canaux rectilignes traversants ;
- un deuxième mode de réalisation dans lequel les canaux de sel combustible et les canaux de sel caloporteur sont des canaux en U ;
- un troisième mode de réalisation dans lequel les canaux de sel combustible sont des canaux rectilignes traversants et les canaux de sel caloporteur sont des canaux en U ;
- un quatrième mode de réalisation dans lequel les canaux de sel combustible sont des canaux en U et les canaux de sel caloporteur sont des canaux rectilignes traversants.

Dans le deuxième mode de réalisation (où tous les canaux sont des canaux en U), aucune cavité de circulation et d'homogénéisation du sel combustible n'est prévue entre la face inférieure de la matrice et la face inférieure de l'enceinte primaire puisque le sel combustible ressort de tous les canaux du côté de la face supérieure de la matrice (contrairement aux premier et troisième modes de réalisation où les canaux de sel combustible sont traversants). De même, dans ce deuxième mode de réalisation, une seule cavité latérale est nécessaire pour le brassage et la circulation du sel caloporteur (contrairement aux premier et quatrième modes de réalisation où les canaux de sel caloporteur sont traversants).

Le deuxième mode de réalisation (où tous les canaux sont en U) est donc plus compact que les autres. Il s'avère qu'il est également plus avantageux en termes de rendement dans le cas d'une matrice « miniature », dont les côtés ne dépassent pas 45 cm et qui est conçue pour produire une puissance de l'ordre de 2 à 3 mégawatts thermiques (ou de l'ordre d'un mégawatt électrique). Il s'avère également très efficace aussi dans le cas d'une « petite » matrice dont les côtés mesurent de l'ordre de 100 cm et qui est conçue pour produire une puissance de l'ordre d'une centaine de mégawatts thermiques (ou 30 à 50 MW(e)). Toutefois, le premier mode de réalisation (où tous les canaux sont traversants) fournit également des résultats très satisfaisants, notamment dans le cas d'une « petite » matrice dimensionnée pour produire une cinquantaine de mégawatt électriques ou moins.

Selon une caractéristique possible de l'invention, les canaux de sel combustible et les canaux de sel caloporteur présentent une dimension comprise entre 5 mm et 12 mm dans la direction de l'épaisseur des couches de sel combustible et des couches de sel caloporteur. De préférence, concernant les canaux de sel combustible, cette dimension est comprise entre 7 mm et 12 mm, idéalement de l'ordre de 10 mm, lorsque ces canaux sont des canaux rectilignes traversants, et entre 5 mm et 10 mm, idéalement de l'ordre de 7 mm lorsqu'il s'agit de canaux en U. La dimension des canaux de sel caloporteur selon la direction de l'épaisseur des couches est de préférence comprise entre 5 mm et 10 mm, idéalement de l'ordre de 7 mm, qu'il s'agisse de canaux rectilignes traversants ou de canaux en U.

Sont maintenant décrits les moyens de circulation du sel caloporteur dans le cas où les couches de canaux de sel caloporteur comprennent chacune deux canaux en U.

Dans ce cas, il peut être prévu que les moyens de circulation du sel caloporteur comprennent un collecteur central similaire à celui décrit pour les moyens de circulation de sel combustible (c'est-à-dire un collecteur central ayant une grande base et une ouverture sommitale reliées par une face interne en forme de trémie pyramidale), dont la grande base recouvre uniquement la tranche centrale de la première face latérale de la matrice et dont l'ouverture sommitale est connectée à l'orifice d'entrée ou de sortie en sel caloporteur de l'enceinte primaire.

En variante, les moyens de circulation du sel caloporteur comprennent un collecteur intégral à conduits intégrés, de préférence de forme extérieure parallélépipédique, le collecteur intégral ayant une face frontale interne, une face frontale opposée et quatre flancs, la face frontale interne s'étendant en regard de la première face latérale de la matrice. La face frontale interne du collecteur forme trois trémies pyramidales, à savoir une trémie centrale s'étendant en regard de la tranche centrale de la première face latérale de la matrice, et deux trémies périphériques s'étendant en regard des deux tranches périphériques de la première face latérale de la matrice. La trémie centrale est prolongée par un conduit ménagé dans l'épaisseur du collecteur et débouchant sur une première ouverture latérale située sur l'un des flancs du collecteur. Les trémies périphériques sont prolongées chacune par un conduit secondaire ménagé dans l'épaisseur du collecteur, les deux conduits secondaires rejoignant un conduit principal (également ménagé dans l'épaisseur du collecteur) qui débouche sur une seconde ouverture latérale située sur l'un des flancs du collecteur, de préférence celui-là même où est située la première ouverture latérale. La première ouverture latérale du collecteur est connectée à l'orifice de sortie en sel caloporteur de l'enceinte primaire, tandis que la seconde ouverture du collecteur est connectée à l'orifice d'entrée en sel caloporteur de l'enceinte primaire, ou inversement.

Un tel collecteur intégral (à triple trémie et à conduits intégrés) est de préférence en graphite ou en graphène. Il participe alors à la réflexion des neutrons issus du cœur du réacteur. Il est avantageusement fabriqué par impression 3D.

Il présente de plus deux avantages principaux, par rapport à un collecteur central (à trémie unique) tel que précédemment décrit. Le premier avantage est qu'il garantit une répartition égale, en volume de sel caloporteur injecté (ou extrait, selon le sens de circulation imposé), entre les deux tranches périphériques de la première face latérale de la matrice. Le second avantage est qu'il garantit aussi l'homogénéité thermique du sel caloporteur à l'entrée de la matrice car le sel caloporteur froid entrant dans l'enceinte primaire est directement injecté dans la matrice. A l'inverse lorsqu'un collecteur central à trémie unique est utilisé, il ne peut pas être complètement exclu que le sel caloporteur présente une température hétérogène dans la cavité latérale, avec des zones plus froides ou des points chauds, en raison d'un brassage insuffisant dans ladite cavité.

Quel que soit le collecteur considéré (collecteur central -à trémie unique- ou collecteur intégral -avec trois trémies et des conduits intégrés-), les moyens de circulation du sel caloporteur comprennent de plus au moins une pompe extérieure à l'enceinte primaire voire extérieure à la couche réflectrice du sarcophage, configurée pour extraire le sel caloporteur (chaud) du réacteur par l'orifice de sortie en sel caloporteur de l'enceinte primaire et par l'ouverture sommital du collecteur central ou la première ouverture latérale du collecteur intégral (dans le cas où l'ouverture sommitale du collecteur central ou la première ouverture latérale du collecteur intégral est connectée audit orifice de sortie) ou pour injecter le sel caloporteur (froid) dans le collecteur via l'orifice d'entrée en sel caloporteur de l'enceinte primaire et par l'ouverture sommitale du collecteur central ou la première ouverture latérale du collecteur intégral (dans le cas où l'ouverture sommitale du collecteur central ou la première ouverture latérale du collecteur intégral est connectée audit orifice d'entrée).

Comme indiqué en introduction, l'invention propose de plus un électrogénérateur comprenant un réacteur de fission nucléaire selon l'invention.

Selon une caractéristique possible, l'électrogénérateur comprend :
- un échangeur de chaleur secondaire alimenté en sel caloporteur chaud sortant du réacteur, et dans lequel le sel caloporteur chaud cède de la chaleur à du dioxyde de carbone en phase supercritique,
- une turbine à CO₂ supercritique reliée à la sortie de l'échangeur de chaleur secondaire,
- une génératrice électrique, par exemple une génératrice à haute vitesse, couplée ou intégrée à la turbine à CO₂ supercritique,
- un convertisseur électronique de puissance.

Selon une caractéristique possible, la turbine à CO₂ supercritique est une turbine fonctionnant en cycle fermé avec une compression bi-étagée et un refroidissement intermédiaire d'une partie du fluide seulement.

Selon une caractéristique possible, l'électrogénérateur comprend un boîtier externe fermé contenant l'ensemble des éléments précédemment définis, à savoir le réacteur de fission nucléaire à échangeur de chaleur primaire intégré, l'échangeur de chaleur secondaire, la turbine à CO₂ supercritique, la génératrice électrique et le convertisseur électronique de puissance. De préférence ce boîtier externe renferme de plus une unité de commande informatique et des moyens de télécommunication reliés à l'unité de commande, comme par exemple un émetteur/récepteur 5G, permettant de piloter à distance l'unité de commande qui reste inaccessible localement pour des raisons de sécurité.

L'unité de commande est configurée pour surveiller un certain nombre de paramètres dits passifs, mesurés par des capteurs appropriés, et pour commander de façon active le débit ou la vitesse de circulation du sel caloporteur (par commande de la pompe de circulation du sel caloporteur), ce dernier paramètre étant le seul paramètre dit actif de l'électrogénérateur (hormis les moyens d'orientation des ailettes de ventilation du boîtier externe décrites plus loin).

Parmi les paramètres passifs surveillés, on peut citer la vitesse de rotation de la pompe centrifuge assurant la circulation du sel combustible, la pression du ciel gazeux, la pression dans le réservoir tampon de gaz neutre, la pression dans le réservoir de récupération des produits de fission gazeux, la vitesse ou le débit de la pompe de l'échangeur de chaleur secondaire ou de la turbine à CO₂, le courant électrique et/ou la tension électrique et/ou la puissance électrique issus de la génératrice, la température du sel combustible dans la matrice, la température du sel caloporteur à la sortie de l'enceinte primaire, la température de l'air à l'intérieur du boîtier extérieur, etc.

Selon une caractéristique possible de l'invention, le boîtier extérieur de l'électrogénérateur comprend des ailettes de ventilation orientables et motorisées qui peuvent être pivotées entre une position fermée dans laquelle le boîtier extérieur est étanche et une position ouverte permettant la circulation d'air entre l'intérieur et l'extérieur du boîtier aux fins d'évacuation de chaleur en cas de surchauffe.

L'invention s'étend à un réacteur et à un électrogénérateur caractérisés en combinaison par tout ou partie des caractéristiques mentionnées ci-avant et ci-après.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 est une vue en perspective d'un premier mode de réalisation d'une matrice selon l'invention ;
[Fig. 2] la figure 2 représente des coupes selon des plans verticaux de la matrice de la figure 1 ; plus précisément, la partie gauche de la figure est une coupe par un plan vertical YZ d'une couche de sel combustible de la matrice de la figure 1 ; la partie droite de la figure 2 est une coupe par un plan YZ d'une couche de sel caloporteur de la matrice de la figure 1 ;
[Fig. 3] la figure 3 représente des coupes selon des plans verticaux d'un deuxième mode de réalisation d'une matrice selon invention ; plus précisément, la partie gauche de la figure est une coupe d'une couche de sel combustible par un plan vertical YZ tandis que la partie droite de la figure est une coupe d'une couche de sel caloporteur par un plan YZ ;
[Fig. 4] la figure 4 est une vue en perspective éclatée d'une partie d'un réacteur selon l'invention illustrant la matrice de la figure 1 avec une partie des moyens de circulation du sel combustible du réacteur ;
[Fig. 5] la figure 5 est une vue en perspective de la matrice de la figure 1 à laquelle est associée un collecteur central et deux pompes pour la circulation du sel caloporteur ;
[Fig. 6] la figure 6 est une vue en perspective de la matrice de la figure 1 à laquelle est associée un collecteur intégral pour la circulation du sel caloporteur ;
[Fig. 7] la figure 7 est une vue en perspective d'un collecteur intégral pour la circulation du sel caloporteur, depuis une face frontale interne dudit collecteur ;
[Fig. 8] la figure 8 est une vue en perspective du collecteur intégral de la figure 7, depuis une face frontale externe dudit collecteur ;
[Fig. 9] la figure 9 est une vue en perspective éclatée d'une partie d'un réacteur selon l'invention illustrant la matrice de la figure 1 avec une partie des moyens de circulation du sel caloporteur du réacteur dont le collecteur intégral des figures 7 et 8 ;
[Fig. 10] la figure 10 est une représentation schématique en perspective d'un mode de réalisation d'un électrogénérateur selon l'invention, dont une partie du boîtier externe a été arrachée.

Les éléments identiques représentés sur les figures précitées sont identifiés par des références numériques identiques.

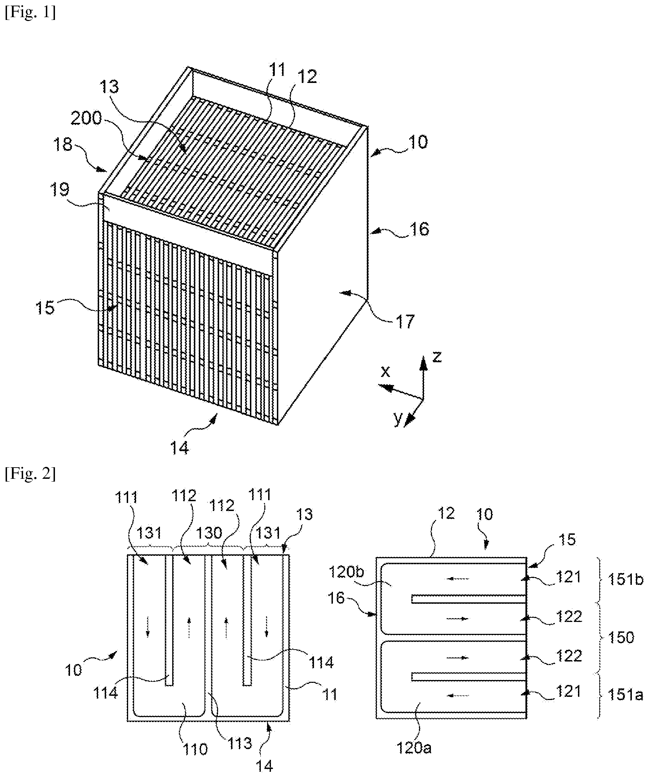

La figure 1 représente un premier mode de réalisation d'une matrice selon l'invention dans laquelle les canaux de sel combustible et caloporteur sont des canaux en U. Cette matrice 10 comprend une alternance de couches de sel combustible 11 et de couches de sel caloporteur 12. Les couches 11 et 12 ont des sections carrées (dans des plans YZ) et forment un ensemble qui peut être cubique. La matrice comprend de plus deux couches d'extrémité formant les première et deuxième faces latérales 15 et 16 de la matrice. Ces couches d'extrémité sont avantageusement des couches de sel caloporteur, de section rectangulaire (dans des plans YZ) avec une hauteur (selon la direction Z) supérieure à la hauteur des couches 11 et 12. Les faces supérieure 13 et inférieure 14 peuvent être carrées ou rectangulaires.

Par ailleurs, la matrice comprend un bandeau 19 à chacune de ses troisième et quatrième faces latérales 16, 17. Les bandeaux 19 et la partie en débord (vers le haut) des couches d'extrémités 15, 16 délimitent une cavité supérieure 200 destinée à accueillir au moins une partie des moyens de circulation du sel combustible et à assurer le brassage et l'homogénéité thermique dudit sel combustible.

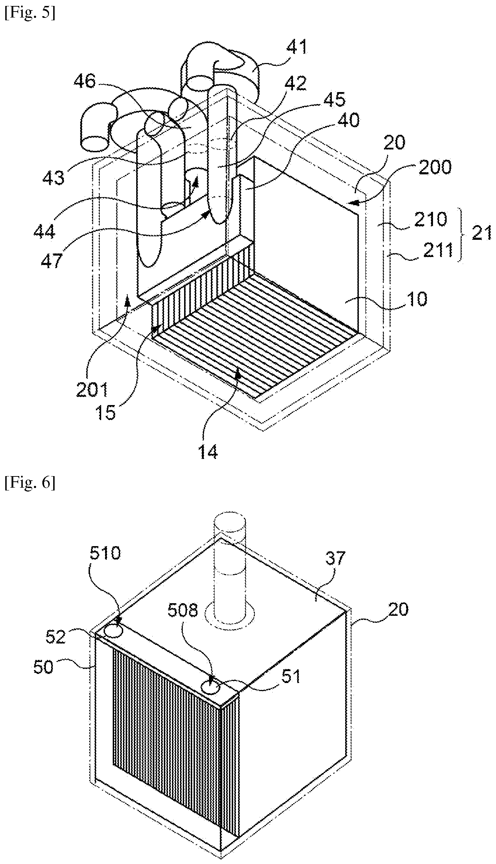

Comme on le verra plus loin, outre cette cavité supérieure 200, le cœur de réacteur comporte aussi au moins une cavité latérale 201 (voir fig. 5 par exemple) en regard de la première face latérale 15 de la matrice. Cette cavité latérale 201 est destinée à accueillir au moins une partie des moyens de circulation du sel caloporteur et à assurer le brassage et l'homogénéité thermique dudit sel caloporteur.

La matrice est chargée en sel combustible dans les couches de sel combustible et en sel caloporteur dans les couches de sel caloporteur. La matrice forme ainsi à la fois le cœur du réacteur selon l'invention et son échangeur de chaleur primaire.

Le sel combustible utilisé dans un réacteur selon l'invention contient par définition des noyaux lourds, parmi lesquels des isotopes fissibles (susceptibles de fissionner sous l'effet d'un bombardement de neutrons rapides ou thermiques) et/ou des isotopes fissiles (susceptibles de fissionner sous l'effet d'un bombardement de neutrons rapide uniquement), mais aussi des actinides mineurs destinés à être incinérés dans le réacteur. Seule une faible proportion d'isotopes fissibles et/ou d'isotopes fissiles est nécessaire.

Outre une telle matrice, un réacteur selon l'invention comprend une enceinte primaire 20 et un sarcophage 21 tels ceux que l'on peut apercevoir en trait fantôme sur les figures 5, 6 et 9. L'enceinte primaire 20 a pour fonction de recevoir la matrice et de confiner le sel combustible que celle-ci contient.

Le sarcophage comprend au moins une couche réflectrice 210 orientée vers l'intérieur du réacteur et une couche externe de blindage 211. La couche réflectrice 210 est en essentiellement constituée d'un matériau carboné comme le graphite ou le graphène. Elle comprend avantageusement une masse de graphite de 15 à 30 cm d'épaisseur intégrant des aiguilles de bore. La couche externe de blindage 211 comprend avantageusement une masse de plomb de 5 à 20 cm d'épaisseur, avec éventuellement des aiguilles de bore si nécessaire.

Lorsque la criticité est atteinte, des noyaux fissibles présents dans le sel combustible contenu dans la matrice se mettent à fissionner et génèrent des neutrons rapides qui entraînent la fission d'autres noyaux fissibles ou fissiles, ainsi que la désintégration des actinides mineurs éventuellement présents. Ces neutrons étant rapides ils n'atteignent pas tous un noyau susceptible de fissionner et certains s'échappent de l'enceinte primaire ; ceux-là sont alors réfléchis par la couche réflectrice 210 du sarcophage ou ralentis jusqu'à être absorbés par celle-ci. Quasiment tous les neutrons générés dans les canaux de sel combustible de la matrice sont ainsi réfléchis ou absorbés par la couche réflectrice 210. Le faible pourcentage de neutrons résiduels parvenant à traverser la couche réflectrice est absorbé par la couche de blindage 211 en plomb du sarcophage, laquelle couche de blindage abat de plus les rayonnements gamma émis par les neutrons impliqués dans une réaction de fission dans la matrice et par les neutrons ralentis dans la couche réflectrice 210.

Le réacteur selon l'invention comprend de plus des moyens de circulation du sel combustible et des moyens de circulation du sel caloporteur, décrits plus loin selon les modes de réalisation de la matrice. La circulation du sel combustible dans le cœur de réacteur permet de garantir une parfaite homogénéité thermique du sel combustible.

Les couches de la matrice 10 (premier mode de réalisation) illustrée à la figure 1 sont visibles en coupe à la figure 2 ; elles sont toutes identiques, à l'exception des couches d'extrémité formant les faces latérales 17, 18 de la matrice.

Chaque couche de sel combustible 11 (voir partie gauche de la figure 2) présente des faces pleines et est traversée par deux canaux en U 110 symétriques par rapport à un axe central vertical de la couche, canaux en U dans lesquels le sel combustible circule selon une direction verticale, du haut vers le bas puis du bas vers le haut. Chaque canal 110 de sel combustible présente une extrémité d'entrée 111 et une extrémité de sortie 112. Les extrémités de sortie 112 des deux canaux sont situées dans une tranche centrale 130 de la face supérieure 13 de la matrice. Les extrémités d'entrée 111 des deux canaux de sel combustible sont situées dans deux tranches périphériques 131 de la face supérieure 13 de la matrice.

De façon similaire, chaque couche de sel caloporteur 12 (voir partie droite de la figure 2) présente des faces pleines et est traversée par deux canaux en U symétriques par rapport à un axe central horizontal de la couche, canaux en U dans lesquels le sel caloporteur circule selon une direction horizontale, dans un sens (de la droite de la figure vers la gauche) puis dans l'autre. Chaque canal de sel caloporteur 120a, 120b présente une extrémité d'entrée 121 débouchant dans une tranche périphérique 151a, 151b de la face latérale 15 de la matrice et une extrémité de sortie 122 débouchant dans une tranche centrale 150 de la face latérale 15 de la matrice.

En d'autres termes, les couches de sel combustible et de sel caloporteur ont la même structure mais elles sont orientées avec un décalage de 90° de façon à ce que les canaux en U s'étendent essentiellement verticalement dans les couches de sel combustible 11 et débouchent tous sur la face supérieure 13 de la matrice tandis qu'il s'étendent essentiellement horizontalement dans les couches de sel caloporteur 12 et débouchent tous sur l'une des faces latérales de la matrice, en l'occurrence la face 15 (qualifiée de « première » face latérale). Dans une telle matrice, la face inférieure 14, et les faces latérales 16 à 18 sont borgnes.

A noter que les couches d'extrémité formant les faces latérales 17, 18 de la matrice sont des couches de sel caloporteur qui de préférence diffèrent légèrement des autres couches de sel caloporteur de la matrice en ce qu'elles ne sont pas symétriques par rapport à leur axe central horizontal. Ainsi, dans l'exemple illustré, chacune de ces couches d'extrémité 17, 18 comprend un canal inférieur qui est identique au canal inférieur 120a des autres couches de sel caloporteur de la matrice, mais un canal supérieur qui est plus large que le canal 120b des autres couches de sel caloporteur de la matrice. Ce canal supérieur s'étend donc en partie en regard de la cavité supérieure 200, ce qui permet d'assurer un refroidissement de cette cavité.

A titre d'exemple, chaque couche, qu'il s'agisse d'une couche de sel combustible 11 ou d'une couche de sel caloporteur 12, mesure 10 mm d'épaisseur (selon la direction X) et chaque canal de sel combustible 110 ou caloporteur 120a, 120b mesure de préférence 7 mm dans le sens de l'épaisseur de la couche 11, c'est-à-dire selon la direction X. Les canaux de sel combustible d'une couche et les canaux de sel caloporteur de la couche adjacente sont donc distants d'environ 3mm à leurs points de croisement. A noter que l'échelle n'est pas respectée dans les dessins annexés, en particulier sur la figure 2, l'épaisseur de matière 113 séparant les deux canaux d'une même couche et l'épaisseur de matière 114 séparant les deux branches d'un même canal pouvant être beaucoup plus fine comparée à la largeur des canaux (selon la direction Y). Par exemple, la largeur des canaux en U peut être de l'ordre de 96 mm tandis que l'épaisseur de matière 113 séparant les deux canaux d'une même couche et l'épaisseur de matière 114 séparant les deux branches d'un même canal est de 3 mm. On obtient alors une matrice de 40cm de côté.

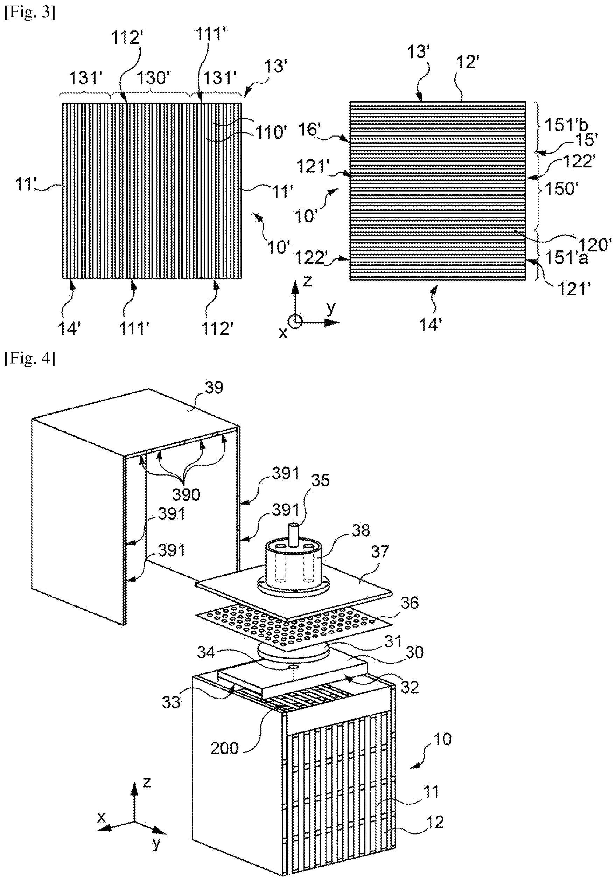

Il est possible de prévoir que toutes les couches de sel caloporteur soient identiques, avec par exemple des canaux de 96 mm de largeur, à l'exception des deux couches d'extrémité formant les faces latérales 17 et 18 de la matrice. Ainsi par exemple, ces couches d'extrémité de sel caloporteur comprennent un canal inférieur de 96 mm de large comme les autres couches et un canal supérieur plus large, mesurant ici 113 mm (cf. fig. 1 et 4). Ceci permet de faire circuler du sel caloporteur sur les parois latérales de la cavité supérieure 200 pour son refroidissement.

La figure 3 représente un deuxième mode de réalisation d'une matrice selon l'invention dans laquelle les canaux de sel combustible et de sel caloporteur sont rectilignes traversants.

À l'instar de la matrice 10 du premier mode de réalisation, la matrice 10' est cubique, ses faces sont par conséquent carrées et un bandeau supérieur est associé à la matrice pour ménager une cavité supérieure au-dessus de la face supérieure 13' de la matrice. De plus, un bandeau inférieur (non représenté) est aussi associé à la matrice 10' pour ménager une cavité inférieure en dessous de la face inférieure 14' de la matrice. Deux cavités latérales sont aussi prévues, dont une cavité amont en regard de la face 15' dans laquelle du sel caloporteur froid provenant d'un échangeur de chaleur secondaire est injecté, et une cavité aval en regard de la face 16' depuis laquelle le sel caloporteur chaud sortant de la matrice est aspiré vers l'extérieur du cœur de réacteur en direction de l'échangeur de chaleur secondaire.

Comme la matrice 10, la matrice 10' est constituée d'une superposition, en alternance, de couches de sel combustible 11' et de couches de sel caloporteur 12', qui sont identiques ou similaires (de légères différences peuvent exister entre les couches de sel combustible et les couches de sel caloporteur concernant notamment le diamètre des canaux et/ou l'épaisseur des couches) mais pivotées de 90° les unes par rapport aux autres.

Chaque couche de sel combustible 11' comprend des canaux de sel combustible 110' rectilignes et traversants qui s'étendent tous selon la direction verticale, de la face supérieure 13' de la matrice jusqu'à sa face inférieure 14'. Le sel combustible circule du bas vers le haut dans les canaux, qualifiés de canaux centraux, situés dans la tranche centrale 130' de la couche, de sorte que l'extrémité d'entrée 111' de ces canaux centraux est située sur la face inférieure 14' de la matrice et l'extrémité de sortie 112' de ces canaux centraux est située sur la face supérieure 13' de la matrice. Le sel combustible circule dans l'autre sens dans les canaux, dits canaux périphériques, situés dans les deux tranches périphériques 131' de la couche. L'extrémité d'entrée 111' de ces canaux périphériques est donc située sur la face supérieure 13' de la matrice tandis que l'extrémité de sortie 112' des canaux périphériques est située sur la face inférieure 14' de la matrice. Les canaux centraux sont ainsi définis de la même façon pour toutes les couches de sel combustible, de sorte que, vue de dessus, la face supérieure 13' de la matrice peut être « divisée » en trois tranches rectangulaires, une tranche centrale 130' regroupant les extrémités de sortie des canaux centraux et deux tranches périphériques 131' regroupant les extrémités d'entrée des canaux périphériques.

A titre d'exemple, les couches de sel combustible 11' mesurent entre 10 mm et 15 mm d'épaisseur (selon la direction X) et les couches de sel caloporteur 12' mesurent entre 8 mm et 13 mm d'épaisseur (selon la direction X). Par ailleurs, chaque canal de sel combustible 110' présente un diamètre compris entre 7 mm et 12 mm, de préférence de l'ordre de 10 mm, et les canaux de sel combustible sont espacés de 3 mm environ selon la direction Y, tandis que chaque canal de sel caloporteur 120' présente un diamètre compris entre 5 mm et 10 mm, de préférence de l'ordre de 7 mm, et les canaux de sel caloporteur sont espacés de 3 mm environ selon la direction Z.

Quelle que soit la matrice utilisée, grâce au bandeau supérieur 19, une cavité supérieure 200 (voir fig. 4) est formée au-dessus de la matrice 10 entre un couvercle 37, qui ferme le cœur de réacteur à son sommet, et la face supérieure 13 de la matrice, afin d'accueillir, entre autres, les moyens de circulation du sel combustible, hors motorisation et unité de commande desdits moyens.

Par ailleurs, lorsque le réacteur est équipé d'une matrice à canaux en U telle la matrice 10 de la figure 2, la matrice est directement posée sur la paroi inférieure de l'enceinte primaire 20. Lorsque le réacteur est équipé d'une matrice à canaux traversant telle la matrice 10' de la figure 3, un espace est laissé entre la face inférieure 14' de la matrice et la paroi inférieure de l'enceinte primaire, par exemple à l'aide d'un bandeau inférieur (non représenté) afin de former une cavité inférieure de circulation et d'homogénéisation du sel combustible (non représentée).

Que le réacteur soit équipé d'une matrice 10 (conforme à la figure 2) ou d'une matrice 10' (conforme à la figure 3), les moyens de circulation du sel combustible peuvent comprendre un collecteur central 30 et une pompe centrifuge 31 tel ceux illustrés à la figure 4.

Le collecteur central 30 présente une grande base 32 rectangulaire dont les dimensions coïncident avec celles de la tranche centrale 130, 130' de la face supérieure 13, 13' de la matrice, une face interne 33 (face inférieure, orientée vers la matrice) en forme de trémie pyramidale et une ouverture sommitale 34. Le collecteur est représenté à distance de la matrice sur la figure 4 puisqu'il s'agit d'une vue éclatée, mais bien entendu, le collecteur est en réalité plaqué contre la face supérieure 13 de la matrice.

La pompe centrifuge 31, d'axe vertical 35, est agencée au-dessus de l'ouverture sommitale 33 du collecteur ; sa rotation entraîne donc l'aspiration vers le haut du sel combustible contenu dans les canaux de la matrice qui s'étendent en regard du collecteur (canaux centraux dans le cas de la matrice 10' et branches centrales des canaux en U dans le cas de la matrice 10) et la projection de ce sel vers les tranches périphériques 131, 131' de la face supérieure de la matrice. Si la matrice est une matrice à canaux en U telle la matrice 10, le sel combustible est alors poussé dans les branches périphériques des canaux en U (de la matrice 10), pour revenir ensuite vers la face supérieure de la matrice via les branches centrales des canaux en U. Si la matrice est une matrice à canaux traversants telle la matrice 10', le sel combustible expulsé de la pompe centrifuge est poussé dans les canaux périphériques jusqu'à la cavité inférieure de brassage et d'homogénéisation du réacteur. Il remonte ensuite dans la matrice par les canaux centraux.

Le collecteur 30 et la pompe centrifuge 31 sont logés dans la cavité supérieure 200 prévue dans le cœur de réacteur au-dessus de la matrice.

Cette cavité supérieure intègre, du bas vers le haut (voir fig.4), non seulement le collecteur 30 et la pompe centrifuge 31, mais aussi :
- un diffuseur 36, composé d'une plaque perforée couvrant toute la surface de la cavité supérieure, et situé juste au-dessus de la pompe centrifuge ; ce diffuseur 36 permet au sel de se dilater sans être perturbé par les turbulences dues à la circulation du flux sortant de la pompe vers les canaux descendants dans les couches de sel combustible ;
- un couvercle amovible 37 avec dispositif de dilatation et système de dégazage. Ce couvercle 37 comporte un dispositif permettant d'accepter jusqu'à 25% de dilatation de l'ensemble du volume de sel combustible compris dans le cœur entre sa phase solide cristallisée à basse température, et sa phase liquide lorsque le sel est fondu à haute température,
- un cavalier 39 dans lequel circule du sel caloporteur. Ce cavalier comporte quatre canaux. Chacun de ces canaux présente une extrémité d'entrée 390 sur la face avant du cavalier dans la paroi horizontale de celui-ci, extrémité d'entrée par laquelle est injecté du sel caloporteur froid. Depuis cette extrémité d'entrée, le canal chemine horizontalement vers l'arrière selon la direction Y dans la paroi horizontale pour « basculer » dans la paroi verticale adjacente puis cheminer de nouveau selon la direction Y (mais vers l'avant) dans cette paroi verticale jusqu'à une extrémité de sortie 391 s'ouvrant sur la face avant du cavalier dans ladite paroi verticale.

L'axe vertical 35 de la pompe centrifuge traverse le couvercle 37 pour être couplé à un moteur déporté (non représenté) situé au-dessus du cœur en dehors du sarcophage 21. Un manchon 38 d'étanchéité et de centrage de l'axe 35 de la pompe centrifuge est fixé sur le couvercle 37 de la cavité supérieure au moyen d'une bride de serrage à six vis (par exemple des vis M6) et d'un joint plat en acier inox/carbone. Ce manchon 38, fabriqué en un matériau carboné, par exemple du graphène, est suffisamment long pour traverser les parois supérieures de l'enceinte primaire 20 et du sarcophage 21. Il comprend les systèmes ou aménagements suivants :
- un ensemble de roulements coniques permettant d'assurer le centrage et l'ajustement en hauteur de l'axe de la pompe,
- un ensemble de joints toriques très haute température entre l'axe de la pompe et le manchon, assurant l'étanchéité dynamique,
- un ensemble de joints toriques très haute température sur la périphérie du manchon, assurant l'étanchéité statique vis-à-vis des parois supérieures de l'enceinte et du sarcophage traversées par le manchon,
- un ou plusieurs canaux internes verticaux traversant le manchon, dit canaux d'échange gazeux, permettant les échanges de gaz entre la cavité supérieure du cœur et des réservoirs sélectifs (non représentés) prévus à cet effet. En mode de fonctionnement normal (réacteur chaud), les gaz issus de la fission et poisons de la réaction (notamment le Xenon-135) sont évacués du cœur par ces canaux d'échange gazeux. En mode arrêt froid du réacteur, on injecte par l'un des canaux d'échange gazeux un gaz neutre permettant de compenser la réduction de volume engendrée par la cristallisation du sel ; le manchon peut par exemple comprendre deux canaux de 5mm de diamètre pour l'extraction des gaz de fission et l'injection de gaz neutre ;
- un canal interne vertical traversant le manchon, dit canal de remplissage/vidange, pour ajouter du sel combustible dans la matrice ou en retirer :
- un ensemble de sondes de mesure ; le manchon comprend par exemple deux canaux de 5mm de diamètre pour le passage de sondes de température et/ou de pression depuis la cavité supérieure du cœur jusqu'à l'extérieur du sarcophage.

Comme précédemment indiqué, le réacteur selon l'invention comprend de plus des moyens de circulation du sel caloporteur. Ces moyens peuvent comprendre un collecteur central 40 tel celui visible à la figure 5 et au moins une pompe 41. L'exemple de la figure 5 reprend une matrice à canaux en U telle celle des figures 1 et 2. Une unique cavité latérale 201 est donc prévue entre la matrice et l'enceinte primaire 20 pour l'homogénéisation du sel caloporteur et pour loger une partie des moyens de circulation du sel caloporteur. Cette cavité latérale 201 est prévue en regard de la première face latérale 15 de la matrice 10. A noter qu'on aperçoit également, sur la figure 5, la cavité supérieure 200 qui accueille les moyens de circulation du sel combustible (non représentés sur cette figure).

A l'instar du collecteur 30 de sel combustible, le collecteur central 40 de sel caloporteur comprend une grande base dont les dimensions coïncident avec la tranche centrale 150 de la première face latérale 15 de la matrice de sorte que le collecteur 40 s'étend en regard des extrémités de sortie 122 des canaux en U de sel caloporteur. A noter que le cavalier 39 n'est représenté sur la figure 5. On comprendra toutefois aisément que, lorsque le cavalier 39 est en place, les extrémités de sortie 391 de ses canaux s'ouvrent en regard du collecteur 40, tandis que les extrémités d'entrée desdits canaux s'ouvrent dans la cavité 201.

Le collecteur 40 comprend aussi une face interne en forme de trémie (non visible sur la figure 5) permettant de guider le sel caloporteur aspiré au niveau de la tranche centrale 150 de la première face latérale 15 jusqu'à une ouverture sommitale 47 du collecteur.

Les moyens de circulation du sel caloporteur comprennent de plus :
- un conduit d'extraction 45 reliant la pompe 41 à l'ouverture sommitale 47 du collecteur central 40. Ce conduit d'extraction 45 traverse la paroi supérieure de l'enceinte primaire 20 par un orifice de sortie en sel caloporteur 42 ménagé dans la paroi supérieure de ladite enceinte au droit de la cavité latérale 201,
- un conduit d'entrée 46 reliant la sortie de l'échangeur de chaleur secondaire avec le cœur du réacteur, lequel conduit d'entrée 46 traverse l'enceinte primaire par un orifice d'entrée en sel caloporteur 43 ménagé dans la paroi supérieure de ladite enceinte au droit de la cavité latérale 201, le conduit 46 comprenant une ouverture 44 débouchant dans la cavité latérale 201 et permettant d'injecter du sel caloporteur froid dans cette cavité. Ce sel froid se répartit ensuite entre les deux tranches périphériques 151a, 151b de la face latérale 15 de la matrice pour pénétrer dans les canaux en U par les extrémités d'entrée 121 de ces derniers, sous l'effet de l'aspiration générée par la pompe d'extraction 41.

Dans l'exemple illustré sur la figure 5, les moyens de circulation du sel caloporteur comprennent un système redondant avec une seconde pompe d'extraction, un second conduit d'extraction connecté à une seconde ouverture sommitale du collecteur 40, et un second conduit d'entrée. Ce système redondant est optionnel, il n'est pas indispensable.

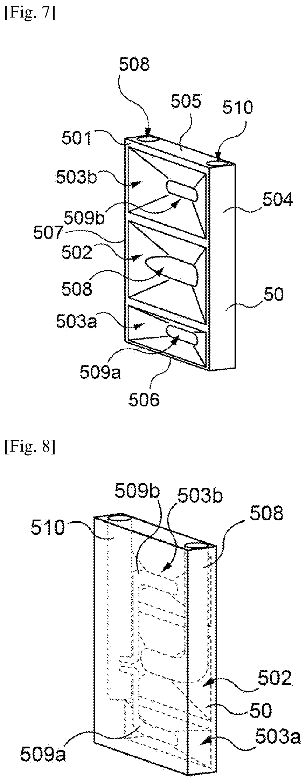

A la place du collecteur central 40, les moyens de circulation du sel caloporteur peuvent comprendre un collecteur intégral 50 tel celui illustré sur les figures 6 à 9, associé à une pompe d'extraction 41 similaire à celle illustrée sur la figure 5. Le collecteur intégral 50 est un élément globalement parallélépipédique qui occupe toute la cavité latérale 201.Ce collecteur intégral 50 présente :
- une face frontale interne 501 qui fait toute la surface de la première face latérale 15 ou 15' de la matrice et est plaquée contre cette dernière,
- une face frontale externe opposée qui est plane et s'étend en regard de la première face latérale de l'enceinte primaire,
- quatre flancs 504 à 507.

La face frontale interne 501 forme trois trémies pyramidales, dont une trémie centrale 502 dont la base correspond à la tranche centrale 150 ou 150' de la première face latérale de la matrice et deux trémies périphériques 503a, 503b. La trémie inférieure 503a correspond à la tranche périphérique inférieure 151a ou 151'a de la première face latérale de la matrice et s'étend en regard de celle-ci. La hauteur de la trémie supérieure 503b est supérieure à celle de la trémie inférieure 503a car elle couvre non seulement la tranche périphérique supérieure 151b ou 151'b de la face latérale 15 de la matrice mais aussi le bandeau 19 de façon à couvrir entièrement les extrémités d'entrée des canaux supérieurs plus larges qui sont prévus dans les couches d'extrémités formant les faces latérales 17, 18 de la matrice, ainsi que les extrémités d'entrée 391 des quatre canaux du cavalier 39. En d'autres termes, on retrouve sur la face interne 501 du collecteur intégral 50 la même asymétrie que dans les couches d'extrémité de sel caloporteur qui forment les faces latérales 17, 18 de la matrice.

La trémie centrale 502 débouche dans un conduit d'extraction 508 ménagé dans l'épaisseur du collecteur, conduit 508 dont l'extrémité de sortie est située sur le flanc supérieur 505 du collecteur ; cette extrémité de sortie s'ouvre sur un orifice de sortie en sel caloporteur 51 ménagé dans la paroi supérieure de l'enceinte primaire 20 (voir fig. 6). Cet orifice de sortie en sel caloporteur 51 est relié par un conduit (non représenté) à une pompe d'extraction (non représentée) située à l'extérieur de l'enceinte primaire 20 voire du sarcophage 21. Par ailleurs, chaque trémie périphérique 503a, 503b débouche dans un conduit secondaire 509a, 509b (formé dans l'épaisseur du collecteur) qui rejoint un conduit principal 510 (également ménagé dans l'épaisseur du collecteur) dont l'extrémité de sortie est située sur le flanc supérieur 505 du collecteur ; cette extrémité de sortie s'ouvre sur un orifice d'entrée en sel caloporteur 52 ménagé dans la paroi supérieure de l'enceinte primaire 20.

Afin d'assurer une répartition égale en sel caloporteur entre les trémies 503a et 503b, c'est-à-dire d'avoir une même pression (et un même débit) de sel caloporteur dans tous les canaux de sel caloporteur de la matrice alors que les trémies 503a et 503b ne sont pas symétriques, le conduit secondaire inférieur 509a présente une section plus petite que le conduit secondaire 509b.

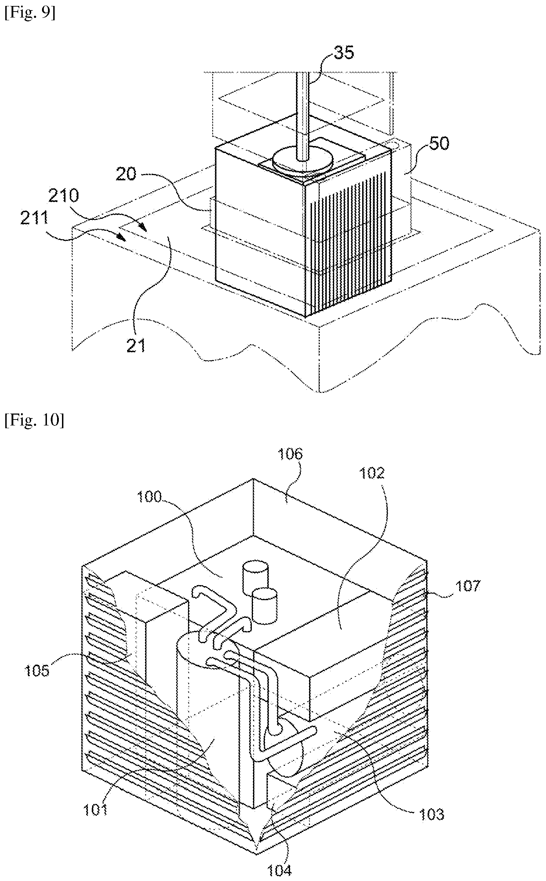

L'invention s'étend à un électrogénérateur tel celui schématiquement représenté à la figure 10. Cet électrogénérateur comprend :
- un réacteur 100 tel que précédemment décrit,
- un échangeur de chaleur secondaire sel/CO₂ 101,
- une turbine 103,
- une génératrice ; dans l'exemple illustré, la turbine 103 est une turbine à génératrice intégrée,
- un convertisseur électronique de puissance 104,
- unité informatique de contrôle 105.

Le sel caloporteur chaud pompé au moyen de la pompe 41 située au-dessus du collecteur 40 ou 50, est conduit vers l'échangeur de chaleur secondaire 101, disposé à l'extérieur du réacteur 100.

L'échangeur de chaleur secondaire 101 permet d'échanger la chaleur entre le sel caloporteur réchauffé et du dioxyde de carbone, ces deux fluides circulant à contre-courant. Il est constitué d'une cuve munie d'un échangeur multitubes en U, tous deux fabriqués en Hastelloy^{®}-N. Les multitubes en U sont traversés par le dioxyde de carbone tandis que le sel caloporteur remplit la chambre principale de la cuve où sont installés les multitubes.

En sortie de l'échangeur de chaleur secondaire 101, le sel caloporteur refroidi est reconduit vers la cavité latérale 201 du réacteur par un tuyau pour y être poussé vers les canaux de sel caloporteur de l'échangeur de chaleur primaire (la matrice) du cœur. Toute la tuyauterie du sel caloporteur en dehors du réacteur 100 peut être fabriquée en Hastelloy^{®}-N.

La tuyauterie du sel caloporteur et l'échangeur de chaleur secondaire 101 sont équipés d'un système de réchauffage par traçage permettant la montée en température rapide du sel en phase de démarrage. En effet, à l'arrêt froid, le sel caloporteur est cristallisé à température ambiante. La fusion du sel est atteinte à une température supérieure à 450°C environ en fonction de la composition exacte du sel. Le système de traçage permet au sel situé en dehors du réacteur d'atteindre la phase liquide. Le système de traçage n'est alimenté qu'au démarrage à froid du réacteur.

Le circuit du sel caloporteur comporte en outre un dispositif permettant d'accepter jusqu'à 25% de dilatation de l'ensemble du volume de sel caloporteur entre sa phase solide cristallisée à basse température, et sa phase liquide lorsque le sel est fondu à haute température.

La puissance du cœur est pilotée par la quantité de chaleur extraite du cœur, donc par le débit du sel caloporteur grâce à la commande de la pompe d'extraction du sel caloporteur 41. Ce paramètre est le seul paramètre de fonctionnement du réacteur qui est commandé de façon active.

En sortie de l'échangeur de chaleur secondaire 101, le dioxyde de carbone en phase supercritique est envoyé sur une turbine 103 à cycle fermé avec recompression pour transformer la chaleur en énergie mécanique. Le cycle de fonctionnement du fluide utilisé (dioxyde de carbone en phase supercritique) dans la turbine comprend une compression bi-étagée, avec refroidissement intermédiaire d'une partie seulement du fluide, ce qui permet de recycler une plus grande quantité de chaleur.

Le cycle au CO₂ supercritique est très intéressant sur le plan thermodynamique et sur le plan encombrement de la turbine. Les deux principales contraintes technologiques sont la réalisation des échangeurs de chaleur notamment dans la zone circum-critique afin d'éviter tout croisement des températures, et celle de turbomachines efficaces pour le dioxyde de carbone.

Le débit principal du fluide sortant de l'échangeur de chaleur secondaire 101 entre dans la turbine 103 à 200 bars et 550°C environ pour y être détendu, et en sort à 79 bars et 440 °C environ vers un premier échangeur tertiaire à haute température pour descendre à 168°C - 79 bars environ, puis dans un second échangeur tertiaire à basse température pour descendre à 70°C - 77 bars environ, avant d'être scindé en deux flux (les deux échangeurs tertiaires associés à la turbine, respectivement à haute et basse température, sont représentés sur la fig.10 par le bloc 102) :
- une partie est refroidie dans un pré-refroidisseur, pour descendre à 32°C - 77 bars environ, puis comprimée dans le compresseur principal de 77 à 200 bars environ, et enfin réchauffée à 158°C environ dans l'échangeur basse température ;
- l'autre partie est comprimée à 200 bars dans le recompresseur, puis mélangée avec l'autre flux sortant de l'échangeur basse température.

Le débit total est ensuite réchauffé à 397°C dans l'échangeur haute température avant de retourner vers l'échangeur de chaleur secondaire sel/CO₂ 101, et le cycle est ainsi fermé.

Les deux échangeurs de chaleur tertiaires (échangeurs CO₂/CO₂) 102 de la turbine sont de type échangeur thermique à circuits imprimés (PCHE) ou à surface minimale triplement périodique (TPMS) et sont ici situés au-dessus de la turbine 103. Le refroidisseur basse température (CO₂-Air) est de type multitubes à ailettes avec brassage croisé, et l'hélice de brassage de l'air ambiant peut être située à l'extrémité de l'axe principal de la génératrice ou dans un dispositif indépendant de l'axe de la génératrice.

La température d'entrée dans l'échangeur de chaleur secondaire 101 (échangeur sel/CO₂) est plus élevée qu'elle le serait en l'absence des échangeurs tertiaires 102, et avec des hypothèses sur les rendements polytropiques des turbomachines de l'ordre de 90% et les efficacités des échangeurs de l'ordre de 95%, le rendement global approche les 50%. Grâce à la récupération de chaleur dans la turbine CO₂ à cycle fermé (dans les échangeurs 102 de type PCHE ou TPMS par exemple), la température du CO₂ « refroidi » par la turbine est plus élevée qu'en l'absence de récupérateurs de chaleur 102, ce qui garantit un delta de températures entrée/sortie de l'échangeur secondaire 101 plus faible et donc un rendement global plus élevé. Une pompe de circulation hélicoïdale est intégrée à l'arbre de rotation de la turbine et située juste après le premier étage de décompression pour plus de compacité.

La vitesse de rotation de la turbine 103 est de l'ordre de plusieurs dizaines de milliers de tours par minute.

La turbine est couplée à une génératrice électrique très haute vitesse, de préférence via un train épicycloïdal, permettant de transformer la puissance mécanique rotative en une puissance électrique triphasée contrôlée en courant-tension. Dans l'exemple illustré, la génératrice est intégrée dans le bloc 103, qui est par conséquent qualifié de turbine à génératrice intégrée.

Le courant électrique ainsi généré est envoyé sur un convertisseur électronique de puissance 104 permettant d'assurer une tension nominale et une fréquence correspondant aux standards locaux.

L'axe de la génératrice est également doté d'un moteur électrique destiné au démarrage de la turbine, notamment pour assurer le flux de circulation initial du dioxyde de carbone, en particulier lors d'un démarrage à froid du réacteur.

Comme précédemment indiqué, l'électrogénérateur comprend de plus une unité de commande informatique 105, pour la surveillance passive d'un certain nombre de paramètres de fonctionnement mesurés à l'aide de capteurs divers, et pour la commande active de la pompe d'extraction du sel caloporteur 41. Cette unité de commande intègre des moyens de télécommunication comme par exemple une connexion 5G au minimum, permettant d'une part de transmettre les valeurs mesurées pour les paramètres de fonctionnement surveillés, et d'autre part de piloter à distance la pompe d'extraction du sel caloporteur 41 afin d'ajuster la température du cœur du réacteur ou de commander l'arrêt du réacteur par exemple.

Par ailleurs, le boîtier externe est doté d'ailettes orientables 107 qui peuvent être ouvertes pour assurer une ventilation entre l'intérieur et l'extérieur du boîtier en cas de surchauffe. Ces ailettes de ventilation peuvent être placées en position ouverte, soit de façon automatique lorsque la température de l'air à l'intérieur du boîtier extérieur excède un seuil prédéterminé, soit à l'aide d'une commande à distance. Elles sont toutefois dimensionnées pour n'autoriser aucun accès aux éléments de l'électrogénérateur, en particulier au réacteur et à l'unité de commande, afin de prévenir tout risque de contamination et d'éviter toute possibilité de piratage du réacteur ou de l'électrogénérateur.

## Revendications

1. Réacteur de fission nucléaire à sels fondus (100) comprenant :
- un cœur de réacteur parcouru par un sel combustible comprenant des noyaux lourds susceptibles de fissionner,
- une enceinte primaire (20) contenant le cœur de réacteur, laquelle enceinte primaire est étanche aux sels liquides,
- un sarcophage (21) dans lequel est logé l'enceinte primaire,
- le cœur de réacteur comprenant une matrice (10 ; 10') parallélépipédique comprenant une alternance de couches (11 ; 11') de canaux de sel combustible, dans lesquels circule le sel combustible, et de couches (12 ; 12') de canaux de sel caloporteur, dans lesquels circule un sel caloporteur,
- des moyens de circulation du sel caloporteur (40, 41) pour faire circuler le sel caloporteur au sein de l'enceinte primaire entre un orifice d'entrée en sel caloporteur (43, 52) de l'enceinte primaire, les canaux de sel caloporteur (120 ; 120') de la matrice, puis un orifice de sortie en sel caloporteur (42, 51) de l'enceinte primaire,
- des moyens de circulation du sel combustible (30, 31) pour faire circuler le sel combustible dans les canaux de sel combustible (110 ; 110') de la matrice,
**caractérisé en ce que** les moyens de circulation du sel combustible sont configurés pour extraire le sel combustible d'une partie des canaux de sel combustible par une face (13 ; 13') de la matrice et pour propulser le sel combustible dans l'autre partie des canaux de sel combustible par cette même face de la matrice.

2. Réacteur selon la revendication 1, caractérisé en ce les moyens de circulation du sel combustible (30, 31) sont configurés pour faire circuler le sel combustible uniquement à l'intérieur de l'enceinte primaire, en cycle fermé sans régénération du sel combustible, l'enceinte primaire (20) étant dépourvue d'orifice de sortie du sel combustible.

3. Réacteur selon l'une des revendications 1 ou 2, caractérisé en ce le sarcophage (21) comprend au moins une couche réflectrice (210) en un matériau carboné, orientée vers le cœur de réacteur et configurée pour rendre le sel combustible critique, et une couche de blindage (211) pour l'abattement des rayonnements et neutrons résiduels, configurée pour absorber ou neutraliser les rayonnements gammas issus du cœur du réacteur et/ou de la couche réflectrice ainsi que des neutrons de fuite résiduels qui parviendraient à traverser la couche réflectrice (210) du sarcophage.

4. Réacteur selon la revendication 1 à 3, **caractérisé en ce que** les canaux de sel combustible (110 ; 110') s'étendent tous, dans les couches de canaux de sel combustible (11 ; 11'), selon une direction verticale orthogonale à une face supérieure (13 ; 13') de la matrice, et les canaux de sel caloporteur (120a, 120b ; 120') s'étendent tous, dans les couches de canaux de sel caloporteur (12 ; 12'), selon une direction orthogonale à l'une (15 ; 15'), première, des faces latérales de la matrice.

5. Réacteur selon la revendication 4, **caractérisé en ce que** les moyens de circulation du sel combustible comprennent au moins :
- un élément (30), dit collecteur central, agencé dans l'enceinte primaire (20) en regard, au-dessus, d'une face supérieure (13 ; 13') de la matrice, ledit collecteur primaire comprenant d'un côté une grande base (32) adjacente à la face supérieure (13 ; 13') de la matrice, laquelle grande base recouvre une partie ou tranche centrale (130 ; 130') de la face supérieure, et d'un autre côté une ouverture sommitale (34), une face interne (33) en forme de trémie pyramidale reliant la grande base à l'ouverture sommitale,
- et une pompe centrifuge (31), agencée dans l'enceinte primaire (20) en regard, au-dessus, de l'ouverture sommitale (34) du collecteur central.

6. Réacteur selon l'une des revendications 4 ou 5, **caractérisé en ce que** les moyens de circulation du sel caloporteur comprennent :
- un élément (40), dit collecteur, intégré dans l'enceinte primaire, le collecteur ayant d'un côté une grande base adjacente à la première face latérale (15 ; 15') de la matrice et d'un autre côté au moins une ouverture reliée soit à l'orifice d'entrée en sel caloporteur (43) de l'enceinte primaire, soit à l'orifice de sortie en sel caloporteur (42) de l'enceinte primaire,
- une ou deux pompes (41) agencées à l'extérieur de l'enceinte primaire (20).

7. Réacteur selon l'une des revendications 1 à 6, **caractérisé en ce que** la matrice (10 ; 10') est monobloc.

8. Réacteur selon l'une des revendications 1 à 7, **caractérisé en ce que** la matrice (10 ; 10') est en un ou plusieurs matériaux choisis parmi : le graphène, les mousses de carbure de silicium, les mousses de graphène et carbure de silicium, des combinaisons des matériaux précédents.

9. Réacteur selon l'une des revendications 1 à 8, **caractérisé en ce que** la matrice (10 ; 10') est obtenue par impression 3D.

10. Réacteur selon la revendication 3, **caractérisé en ce que** le sarcophage (21) comprend une couche de thorium entre la couche réflectrice (210) et la couche de blindage (211), laquelle couche de thorium est destinée à être fertilisée par absorption des neutrons de fuite qui s'échappent de l'enceinte primaire (20) et sont ralentis par la couche réflectrice (210).

11. Réacteur selon l'une des revendications1 à 10, **caractérisé en ce qu'**il comprend :
- un ciel gazeux au-dessus de la matrice (10 ; 10'),
- un réservoir de récupération de produits de fission gazeux, connecté au ciel gazeux,
- un réservoir tampon de gaz neutre et des moyens d'injection dudit gaz neutre dans le ciel gazeux aux fins de compensation de variations de volume du sel combustible.

12. Réacteur selon l'une des revendications 1 à 11, **caractérisé en ce qu'**un système de préchauffage par traçage est prévu dans les moyens de circulation (40, 41, 45, 46 ; 50, 41) du sel caloporteur.

13. Réacteur selon l'une des revendications 1 à 12, **caractérisé en ce qu'**il comprend un dispositif de contrôle du débit de circulation du sel caloporteur dans le réacteur.

14. Réacteur selon l'une des revendications 1 à 13, **caractérisé en ce que** la matrice est un cube de 35 cm à 120 cm de côté et/ou dont le volume de sel combustible à l'état liquide est inférieur à 500 litres.

15. Réacteur selon l'une des revendications 1 à 14, **caractérisé en ce que** les canaux de sel combustible (110 ; 110') et les canaux de sel caloporteur (120a, 120b ; 120') présentent une dimension comprise entre 5 mm et 12 mm dans la direction de l'épaisseur des couches de sel combustible et des couches de sel caloporteur.

16. Réacteur selon la revendication 4, **caractérisé en ce que** :
- les canaux de sel combustible (110') sont rectilignes et traversants, s'étendant de la face supérieure (13') de la matrice à une face inférieure (14') de la matrice,
- un cavité supérieure (200) est prévue entre la face supérieure (13') de la matrice et une paroi supérieure de l'enceinte primaire (20) pour loger les moyens de circulation (30, 31) du sel combustible à l'exception d'éléments de motorisation et de commande desdits moyens de circulation du sel combustible,
- une cavité inférieure de circulation et d'homogénéisation est prévue entre la face inférieure de la matrice (14') et une paroi inférieure de l'enceinte primaire (20),
- les moyens de circulation du sel combustible comprennent, du côté de la face supérieure (13') de la matrice, un collecteur central (30) et une pompe centrifuge (31), le collecteur central ayant une grande base (32) recouvrant une partie centrale ou une tranche centrale (130') de la face supérieure de la matrice, une face interne (33) en forme de trémie pyramidale et une ouverture sommitale (34), la pompe centrifuge (31) étant configurée pour propulser le sel combustible issu de l'ouverture sommitale du collecteur central vers la partie périphérique ou les tranches périphériques (131') de la face supérieure de la matrice.

17. Réacteur selon la revendications 4, **caractérisé en ce que** :
- chaque couche de canaux de sel combustible (11) comprend deux canaux de sel combustible en U (110) agencés de façon symétrique de part et d'autre d'un axe central de ladite couche, chaque canal de sel combustible en U (110) ayant une extrémité de sortie (112) située dans une tranche centrale (130) de la face supérieure de la matrice et une extrémité d'entrée (111) située dans une tranche périphérique (131) de ladite face supérieure,
- une cavité supérieure (200) est prévue entre la face supérieure (13) de la matrice et une paroi supérieure de l'enceinte primaire (20) pour loger les moyens de circulation (30, 31) du sel combustible à l'exception d'éléments de motorisation et de commande desdits moyens de circulation du sel combustible,
- les moyens de circulation du sel combustible comprennent, du côté de la face supérieure (13) de la matrice, un collecteur central (30) et une pompe centrifuge (31), le collecteur central ayant une grande base (32) recouvrant une tranche centrale (130) de la face supérieure de la matrice, une face interne (33) en forme de trémie pyramidale et une ouverture sommitale (34), la pompe centrifuge (31) étant configurée pour propulser le sel combustible issu de l'ouverture sommitale du collecteur central vers les tranches périphériques (131) de la face supérieure de la matrice.

18. Réacteur selon la revendication 4, **caractérisé en ce que** :
- les canaux de sel caloporteur (120') sont rectilignes et traversants, s'étendant de la première face latérale (15') de la matrice jusqu'à une deuxième face latérale (16') de la matrice, opposée à la première face latérale, tous les canaux de sel caloporteur ayant une extrémité d'entrée (121') du côté de la première face latérale (15') de la matrice et une extrémité de sortie (122') du côté de la deuxième face latérale (16') de la matrice,
- une cavité de brassage amont est prévue entre la première face latérale (15') de la matrice et une première paroi latérale de l'enceinte primaire (20),
- une cavité de brassage aval est prévue entre la deuxième face latérale (16') de la matrice et une deuxième paroi latérale de l'enceinte primaire (20),
- l'orifice d'entrée en sel caloporteur de l'enceinte primaire débouche dans la cavité de brassage amont, tandis que l'orifice de sortie en sel caloporteur de l'enceinte primaire débouche dans la cavité de brassage aval,
- les moyens de circulation du sel caloporteur comprennent au moins une pompe (41) extérieure à l'enceinte primaire (20), configurée pour injecter le sel caloporteur dans la cavité de brassage amont par l'orifice d'entrée en sel caloporteur de l'enceinte primaire ou pour extraire le sel caloporteur de la cavité de brassage aval par l'orifice de sortie en sel caloporteur de l'enceinte primaire.

19. Réacteur selon la revendication 4, **caractérisé en ce que** :
- chaque couche de canaux de sel caloporteur comprend deux canaux de sel caloporteur en U (120a, 120b) agencés de façon symétrique de part et d'autre d'un axe central de ladite couche, chaque canal de sel caloporteur en U ayant une extrémité située dans une tranche centrale (150) de la première face latérale de la matrice et une autre extrémité située dans une tranche périphérique (151a, 151b) de ladite première face latérale,
- une unique cavité latérale (201) est prévue, entre la première face latérale (15) de la matrice et une première paroi latérale de l'enceinte primaire (20),
- l'orifice d'entrée en sel caloporteur (43, 52) et l'orifice de sortie en sel caloporteur (42, 51) de l'enceinte primaire sont tous deux prévus pour déboucher dans l'unique cavité latérale (201).

20. Réacteur selon la revendication 19, **caractérisé en ce que** les moyens de circulation du sel caloporteur comprennent un collecteur intégral (50) à conduits intégrés, le collecteur intégral ayant une face frontale interne (501), une face frontale externe opposée et quatre flancs (504-507),
la face frontale interne (501) formant une trémie centrale (502) pyramidale s'étendant en regard de la tranche centrale (150) de la première face latérale de la matrice, et deux trémies périphériques (503) pyramidales s'étendant en regard des deux tranches périphériques (151a, 151b) de la première face latérale de la matrice,
la trémie centrale étant prolongée par un conduit (508) ménagé dans l'épaisseur du collecteur et débouchant sur une première ouverture latérale située sur l'un des flancs (505) du collecteur,
les trémies périphériques (503) étant prolongées chacune par un conduit secondaire (509) ménagé dans l'épaisseur du collecteur, lesquels conduits secondaires rejoignent un conduit principal (510) qui débouche sur une seconde ouverture latérale située sur l'un des flancs (505) du collecteur,
la première ouverture latérale du collecteur étant connectée à l'orifice de sortie en sel caloporteur (51) de l'enceinte primaire, tandis que la seconde ouverture du collecteur est connectée à l'orifice d'entrée en sel caloporteur (52) de l'enceinte primaire, ou inversement.

21. Electrogénérateur, **caractérisé en ce qu'**il comprend :
- un réacteur de fission nucléaire (100) selon l'une des revendications 1 à 20,
- un échangeur de chaleur secondaire (101), alimenté en sel caloporteur chaud sortant du réacteur, et dans lequel le sel caloporteur chaud cède de la chaleur à du dioxyde de carbone en phase supercritique,
- une turbine à CO₂ supercritique (103) reliée à la sortie de l'échangeur de chaleur secondaire (101),
- une génératrice électrique (103) couplée ou intégrée à la turbine à CO₂ supercritique,
- un convertisseur électronique de puissance (104).

22. Electrogénérateur selon la revendication 21, **caractérisé en ce qu'**il comprend un boîtier externe (106) renfermant le réacteur de fission nucléaire (100), l'échangeur de chaleur secondaire (101), la turbine à CO₂ supercritique (103), la génératrice électrique (103) et le convertisseur électronique de puissance (104), le boîtier externe contenant de plus une unité de commande informatique (105) avec des moyens de télécommunication permettant de piloter à distance l'unité de commande, et **en ce que** le boîtier externe (106) comprend des ailettes de ventilation (107) orientables et motorisées qui peuvent être pivotées entre une position fermée dans laquelle le boîtier extérieur est étanche et une position ouverte permettant la circulation d'air entre l'intérieur et l'extérieur du boîtier.

## Patentansprüche

1. Schmelzsalz-Kernspaltungsreaktor (100), der Folgendes umfasst:
- einen Reaktorkern, der von einem Brennstoffsalz durchzogen ist, das spaltungsfähige schwere Kerne umfasst,
- eine primäre Kammer (20), die den Reaktorkern enthält, wobei die primäre Kammer für flüssige Salze undurchlässig ist,
- eine Ummantelung (21), in der die primäre Kammer untergebracht ist,
- wobei der Reaktorkern eine quaderförmige Anordnung (10; 10') umfasst, die alternierende Schichten (11; 11') von Brennstoffsalz-Kanälen, in denen das Brennstoffsalz zirkuliert, und von Schichten (12; 12') von Wärmeträgersalz-Kanälen, in denen ein Wärmeträgersalz zirkuliert, umfasst,
- Wärmeträgersalz-Zirkulationsmittel (40, 41) zum Zirkulieren des Wärmeträgersalzes innerhalb der primären Kammer zwischen einer Wärmeträgersalz-Einlassöffnung (43, 52) der primären Kammer, den Wärmeträgersalz-Kanälen (120; 120') der Anordnung und dann einer Wärmeträgersalz-Auslassöffnung (42, 51) der primären Kammer,
- Brennstoffsalz-Zirkulationsmittel (30, 31) zum Zirkulieren des Brennstoffsalzes in den Brennstoffsalz-Kanälen (110; 110') der Anordnung,
**dadurch gekennzeichnet, dass** die Brennstoffsalz-Zirkulationsmittel dazu konfiguriert sind, das Brennstoffsalz aus einem Teil der Brennstoffsalz-Kanäle durch eine Fläche (13; 13') der Anordnung zu extrahieren und das Brennstoffsalz durch dieselbe Fläche der Anordnung in den anderen Teil der Brennstoffsalz-Kanäle zu befördern.

2. Reaktor nach Anspruch 1, **dadurch gekennzeichnet, dass** die Brennstoffsalz-Zirkulationsmittel (30, 31) dazu konfiguriert sind, das Brennstoffsalz nur innerhalb der primären Kammer in einem geschlossenen Kreislauf ohne Regeneration des Brennstoffsalzes zirkulieren zu lassen, wobei die primäre Kammer (20) keine Brennstoffsalz-Auslassöffnung aufweist.

3. Reaktor nach einem der Ansprüche 1 oder 2, **dadurch gekennzeichnet, dass** die Ummantelung (21) mindestens eine reflektierende Schicht (210) aus einem kohlenstoffhaltigen Material, die zum Reaktorkern hin ausgerichtet und dazu konfiguriert ist, das Brennstoffsalz kritisch zu machen, und eine Abschirmungsschicht (211) zum Abfangen von Reststrahlung und Neutronen umfasst, die dazu konfiguriert ist, die Gammastrahlung, die vom Reaktorkern und/oder von der reflektierenden Schicht ausgeht, sowie restliche Leckneutronen, die die reflektierende Schicht (210) der Ummantelung durchdringen würden, zu absorbieren oder zu neutralisieren.

4. Reaktor nach Anspruch 1 bis 3, **dadurch gekennzeichnet, dass** sich alle Brennstoffsalz-Kanäle (110; 110') in den Schichten der Brennstoffsalz-Kanäle (11; 11') in einer vertikalen Richtung orthogonal zu einer oberen Fläche (13; 13') der Anordnung erstrecken und alle Wärmeträgersalz-Kanäle (120a, 120b; 120') sich in den Schichten der Wärmeträgersalz-Kanäle (12; 12') in einer Richtung orthogonal zu einer (15; 15') ersten der Seitenflächen der Anordnung erstrecken.

5. Reaktor nach Anspruch 4, **dadurch gekennzeichnet, dass** die Brennstoffsalz-Zirkulationsmittel mindestens Folgendes umfassen:
- ein Element (30), das als zentraler Kollektor bezeichnet wird und in der primären Kammer (20) gegenüber oberhalb einer oberen Fläche (13; 13') der Anordnung angeordnet ist, wobei der primäre Kollektor auf einer Seite eine große Basis (32) neben der oberen Fläche (13; 13') der Anordnung, wobei die große Basis einen zentralen Teil oder Abschnitt (130; 130') der oberen Fläche abdeckt, und auf der anderen Seite eine obere Öffnung (34) umfasst, wobei eine innere Fläche (33) in Form eines pyramidenförmigen Trichters die große Basis mit der oberen Öffnung verbindet,
- und eine Kreiselpumpe (31), die in der primären Kammer (20) gegenüber oberhalb der oberen Öffnung (34) des zentralen Kollektors angeordnet ist.

6. Reaktor nach einem der Ansprüche 4 oder 5, **dadurch gekennzeichnet, dass** die Wärmeträgersalz-Zirkulationsmittel Folgendes umfassen:
- ein Element (40), das als Kollektor bezeichnet wird und in die primäre Kammer integriert ist, wobei der Kollektor auf einer Seite eine große Basis neben der ersten Seitenfläche (15; 15') der Anordnung und auf der anderen Seite mindestens eine Öffnung aufweist, die entweder mit der Wärmeträgersalz-Einlassöffnung (43) der primären Kammer oder mit der Wärmeträgersalz-Auslassöffnung (42) der primären Kammer verbunden ist,
- eine oder zwei Pumpen (41), die außerhalb der primären Kammer (20) angeordnet sind.

7. Reaktor nach einem der Ansprüche 1 bis 6, **dadurch gekennzeichnet, dass** die Anordnung (10; 10') einstückig ist.

8. Reaktor nach einem der Ansprüche 1 bis 7, **dadurch gekennzeichnet, dass** die Anordnung (10; 10') aus einem oder mehreren Materialien besteht, die aus Folgendem ausgewählt sind: Graphen, Siliziumkarbidschäumen, Graphen- und Siliziumkarbidschäumen, Kombinationen der vorherigen Materialien.

9. Reaktor nach einem der Ansprüche 1 bis 8, **dadurch gekennzeichnet, dass** die Anordnung (10; 10') durch 3D-Druck erhalten wird.

10. Reaktor nach Anspruch 3, **dadurch gekennzeichnet, dass** die Ummantelung (21) eine Schicht aus Thorium zwischen der reflektierenden Schicht (210) und der Abschirmungsschicht (211) umfasst, wobei die Thoriumschicht dazu bestimmt ist, durch Absorption von Leckneutronen gedüngt zu werden, die aus der primären Kammer (20) entweichen und durch die reflektierende Schicht (210) verlangsamt werden.

11. Reaktor nach einem der Ansprüche 1 bis 10, **dadurch gekennzeichnet, dass** er Folgendes umfasst:
- ein gasförmiger Kopfraum über der Anordnung (10; 10'),
- einen Rückgewinnungstank für gasförmige Spaltprodukte, der mit dem gasförmigen Kopfraum verbunden ist,
- einen Puffertank für neutrales Gas und Mittel zum Einspritzen des neutralen Gases in den gasförmigen Kopfraum zum Ausgleichen von Schwankungen im Volumen des Brennstoffsalzes.

12. Reaktor nach einem der Ansprüche 1 bis 11, **dadurch gekennzeichnet, dass** in den Wärmeträgersalz-Zirkulationsmitteln (40, 41, 45, 46; 50, 41) ein Begleitvorheizsystem vorgesehen ist.

13. Reaktor nach einem der Ansprüche 1 bis 12, **dadurch gekennzeichnet, dass** er eine Vorrichtung zur Steuerung der Zirkulationsströmungsrate des Wärmeträgersalzes im Reaktor umfasst.

14. Reaktor nach einem der Ansprüche 1 bis 13, **dadurch gekennzeichnet, dass** die Anordnung ein Würfel mit einer Seitenlänge von 35 cm bis 120 cm ist und/oder ein Brennsalzvolumen im flüssigen Zustand von weniger als 500 Liter aufweist.

15. Reaktor nach einem der Ansprüche 1 bis 14, **dadurch gekennzeichnet, dass** die Brennstoffsalz-Kanäle (110; 110') und die Wärmeträgersalz-Kanäle (120a, 120b; 120') eine Abmessung zwischen 5 mm und 12 mm in der Dickenrichtung der Brennstoffsalzschichten und der Wärmeträgersalzschichten aufweisen.

16. Reaktor nach Anspruch 4, **dadurch gekennzeichnet, dass**:
- die Brennstoffsalz-Kanäle (110') geradlinig und durchgehend sind und sich von der oberen Fläche (13') der Anordnung zu einer unteren Fläche (14') der Anordnung erstrecken,
- zwischen der oberen Fläche (13') der Anordnung und einer oberen Wand der primären Kammer (20) ein oberer Hohlraum (200) vorgesehen ist, um die Brennstoffsalz-Zirkulationsmittel (30, 31) unterzubringen, mit Ausnahme der Motorantriebs- und Steuerelemente der Brennstoffsalz-Zirkulationsmittel,
- zwischen der unteren Fläche der Anordnung (14') und einer unteren Wand der primären Kammer (20) ein unterer Zirkulations- und Homogenisierungshohlraum vorgesehen ist,
- die Brennstoffsalz-Zirkulationsmittel auf der Seite der oberen Fläche (13') der Anordnung einen zentralen Kollektor (30) und eine Kreiselpumpe (31) umfassen, wobei der zentrale Kollektor eine große Basis (32), die einen zentralen Teil oder einen zentralen Abschnitt (130') der oberen Fläche abdeckt, eine innere Fläche (33) in Form eines pyramidenförmigen Trichters und eine obere Öffnung (34) aufweist, wobei die Kreiselpumpe (31) dazu konfiguriert ist, das von der oberen Öffnung des zentralen Kollektors kommende Brennstoffsalz in Richtung des peripheren Teils oder der peripheren Abschnitte (131') der oberen Fläche der Anordnung zu befördern.

17. Reaktor nach Anspruch 4, **dadurch gekennzeichnet, dass**:
- jede Schicht der Brennstoffsalz-Kanäle (11) zwei U-förmige Brennstoffsalz-Kanäle (110) umfasst, die symmetrisch auf beiden Seiten einer Mittelachse der Schicht angeordnet sind, wobei jeder U-förmige Brennstoffsalz-Kanal (110) ein Auslassende (112) aufweist, das sich in einem zentralen Abschnitt (130) der oberen Fläche der Anordnung befindet, und ein Einlassende (111), das sich in einem peripheren Abschnitt (131) der oberen Fläche befindet,
- zwischen der oberen Fläche (13) der Anordnung und einer oberen Wand der primären Kammer (20) ein oberer Hohlraum (200) vorgesehen ist, um die Brennstoffsalz-Zirkulationsmittel (30, 31) unterzubringen, mit Ausnahme der Motorantriebs- und Steuerelemente der Brennstoffsalz-Zirkulationsmittel,
- die Brennstoffsalz-Zirkulationsmittel auf der Seite der oberen Fläche (13) der Anordnung einen zentralen Kollektor (30) und eine Kreiselpumpe (31) umfassen, wobei der zentrale Kollektor eine große Basis (32), die einen zentralen Abschnitt (130) der oberen Fläche abdeckt, eine innere Fläche (33) in Form eines pyramidenförmigen Trichters und eine obere Öffnung (34) aufweist, wobei die Kreiselpumpe (31) dazu konfiguriert ist, das von der oberen Öffnung des zentralen Kollektors kommende Brennstoffsalz in Richtung der peripheren Abschnitte (131') der oberen Fläche der Anordnung zu befördern.

18. Reaktor nach Anspruch 4, **dadurch gekennzeichnet, dass**:
- die Wärmeträgersalz-Kanäle (120') geradlinig und durchgehend sind und sich von der ersten Seitenfläche (15') der Anordnung bis zu einer zweiten Seitenfläche (16') der Anordnung, die der ersten Seitenfläche gegenüberliegt, erstrecken, wobei alle Wärmeträgersalz-Kanäle ein Einlassende (121') auf der Seite der ersten Seitenfläche (15') der Anordnung und ein Auslassende (122') auf der Seite der zweiten Seitenfläche (16') der Anordnung aufweisen,
- zwischen der ersten Seitenfläche (15') der Anordnung und einer ersten Seitenwand der primären Kammer (20) ein vorgelagerter Mischhohlraum vorgesehen ist,
- zwischen der zweiten Seitenfläche (16') der Anordnung und einer zweiten Seitenwand der primären Kammer (20) ein nachgelagerter Mischhohlraum vorgesehen ist,
- die Wärmeträgersalz-Einlassöffnung der primären Kammer in den vorgelagerten Mischhohlraum mündet, wohingegen die Wärmeträgersalz-Auslassöffnung der primären Kammer in den nachgelagerten Mischhohlraum mündet,
- die Wärmeträgersalz-Zirkulationsmittel mindestens eine Pumpe (41) außerhalb der primären Kammer (20) umfassen, die dazu konfiguriert ist, das Wärmeträgersalz durch die Wärmeträgersalz-Einlassöffnung der primären Kammer in den vorlagerten Mischhohlraum einzuspritzen oder das Wärmeträgersalz durch die Wärmeträgersalz-Auslassöffnung der primären Kammer aus dem nachgelagerten Mischhohlraum zu extrahieren.

19. Reaktor nach Anspruch 4, **dadurch gekennzeichnet, dass**:
- jede Schicht der Wärmeträgersalz-Kanäle zwei U-förmige Wärmeträgersalz-Kanäle (120a, 120b) umfasst, die symmetrisch auf beiden Seiten einer Mittelachse der Schicht angeordnet sind, wobei jeder U-förmige Wärmeträgersalz-Kanal mit einem Ende, das sich in einem zentralen Abschnitt (150) der ersten Seitenfläche der Anordnung befindet, und ein anderes Ende aufweist, das sich in einem peripheren Abschnitt (151a, 151b) der ersten Seitenfläche befindet,
- zwischen der ersten Seitenfläche (15) der Anordnung und einer ersten Seitenwand der primären Kammer (20) ein einzelner seitlicher Hohlraum (201) vorgesehen ist,
- die Wärmeträgersalz-Einlassöffnung (43, 52) und die Wärmeträgersalz-Auslassöffnung (42, 51) der primären Kammer beide so vorgesehen sind, dass sie in den einzelnen seitlichen Hohlraum (201) münden.

20. Reaktor nach Anspruch 19, **dadurch gekennzeichnet, dass** die Wärmeträgersalz-Zirkulationsmittel einen integrierten Kollektor (50) mit integrierten Leitungen umfassen, wobei der integrierte Kollektor eine innere Vorderfläche (501), eine gegenüberliegende äußere Vorderfläche und vier Seitenwände (504-507) aufweist,
wobei die innere Vorderfläche (501) einen pyramidenförmigen zentralen Trichter (502), der sich gegenüber des zentralen Abschnitts (150) der ersten Seitenfläche der Anordnung erstreckt, und zwei pyramidenförmige periphere Trichter (503) bildet, die sich gegenüber den beiden peripheren Abschnitten (151a, 151b) der ersten Seitenfläche der Anordnung erstrecken,
wobei der zentrale Trichter durch eine Leitung (508) verlängert wird, die in der Dicke des Kollektors ausgebildet ist und in eine erste seitliche Öffnung mündet, die sich an einer der Seitenwände (505) des Kollektors befindet,
wobei die peripheren Trichter (503) durch eine sekundäre Leitung (509) verlängert werden, die in der Dicke des Kollektors ausgebildet ist, wobei die sekundären Leitungen mit einer Hauptleitung (510) verbunden sind, die in eine zweite seitliche Öffnung mündet, die sich an einer der Seitenwände (505) des Kollektors befindet,
wobei die erste seitliche Öffnung des Kollektors mit der Wärmeträgersalz-Auslassöffnung (51) der primären Kammer verbunden ist, während die zweite Öffnung des Kollektors mit der Wärmeträgersalz-Einlassöffnung (52) der primären Kammer verbunden ist, oder umgekehrt.

21. Elektrogenerator, **dadurch gekennzeichnet, dass** er Folgendes umfasst:
- einen Kernspaltungsreaktor (100) nach einem der Ansprüche 1 bis 20,
- einen sekundären Wärmetauscher (101), der mit warmem Wärmeträgersalz aus dem Reaktor versorgt wird und in dem das warme Wärmeträgersalz in der überkritischen Phase Wärme an das Kohlendioxid überträgt,
- eine Turbine für überkritisches CO₂ (103), die mit dem Auslass des sekundären Wärmetauschers (101) verbunden ist,
- einen Stromgenerator (103), der mit der Turbine für überkritisches CO₂ gekoppelt oder in diese integriert ist,
- einen elektronischen Leistungswandler (104).

22. Elektrogenerator nach Anspruch 21, **dadurch gekennzeichnet, dass** er ein Außengehäuse (106) umfasst, das den Kernspaltungsreaktor (100), den sekundären Wärmetauscher (101), die Turbine für überkritisches CO₂ (103), den Stromgenerator (103) und den elektronischen Leistungswandler (104) umschließt, wobei das Außengehäuse außerdem eine Computersteuereinheit (105) mit Telekommunikationsmitteln enthält, die das Steuern der Steuereinheit aus der Ferne ermöglichen,
und dass das Außengehäuse (106) ausrichtbare und motorbetriebene Lüftungsrippen (107) umfasst, die zwischen einer geschlossenen Position, in der das Außengehäuse abgedichtet ist, und einer offenen Position, die die Luftzirkulation zwischen der Innenseite und der Außenseite des Gehäuses ermöglicht, geschwenkt werden können.

## Claims

1. A molten salt nuclear fission reactor (100) comprising:
- a reactor core through which a fuel salt, comprising heavy nuclei likely to fission, flows,
- a primary enclosure (20) containing the reactor core, which primary enclosure is impervious to liquid salts,
- a sarcophagus (21) in which the primary enclosure is housed,
- the reactor core comprising a parallelepiped matrix (10; 10') comprising alternating layers (11; 11') of fuel salt channels, in which the fuel salt circulates, and layers (12; 12') of heat transfer salt channels, in which a heat transfer salt circulates,
- heat transfer salt circulation means (40, 41) for circulating the heat transfer salt within the primary enclosure between a heat transfer salt inlet orifice (43, 52) of the primary enclosure, the heat transfer salt channels (120; 120') of the matrix, then a heat transfer salt outlet orifice (42, 51) of the primary enclosure,
- fuel salt circulation means (30, 31) for circulating the fuel salt in the fuel salt channels (110; 110') of the matrix,
**characterised in that** the fuel salt circulation means are configured to extract the fuel salt from a portion of the fuel salt channels via one face (13; 13') of the matrix and to propel the fuel salt into the other portion of the fuel salt channels via this same face of the matrix.

2. The reactor according to claim 1, **characterised in that** the fuel salt circulation means (30, 31) are configured to circulate the fuel salt only inside the primary enclosure, in a closed cycle without regeneration of the fuel salt, the primary enclosure (20) being devoid of an outlet orifice for the fuel salt.

3. The reactor according to one of claims 1 or 2, **characterised in that** the sarcophagus (21) comprises at least one reflective layer (210) made of a carbon material, oriented towards the reactor core and configured to make the fuel salt critical, and a shield layer (211) for the reduction of residual radiation and neutrons, configured to absorb or neutralise gamma radiation from the reactor core and/or the reflective layer as well as residual leakage neutrons which would manage to pass through the reflective layer (210) of the sarcophagus.

4. The reactor according to one of claim 1 to 3, **characterised in that** the fuel salt channels (110; 110') all extend, in the layers of fuel salt channels (11; 11'), in a vertical direction orthogonal to an upper face (13; 13') of the matrix, and the heat transfer salt channels (120a, 120b; 120') all extend, in the layers of heat transfer salt channels (12; 12'), in a direction orthogonal to one (15; 15'), first, of the lateral faces of the matrix.

5. The reactor according to claim 4, **characterised in that** the fuel salt circulation means comprise at least:
- an element (30), called central collector, arranged in the primary enclosure (20) facing, above, an upper face (13; 13') of the matrix, said primary collector comprising, on one side, a large base (32) adjacent to the upper face (13; 13') of the matrix, which large base covers a central portion or section (130; 130') of the upper face, and, on another side, an top opening (34), an inner face (33) in the form of a pyramidal hopper connecting the large base to the top opening,
- and a centrifugal pump (31), arranged in the primary enclosure (20) facing, above, the top opening (34) of the central collector.

6. The reactor according to one of claims 4 or 5, **characterised in that** the heat transfer salt circulation means comprise:
- an element (40), called a collector, integrated into the primary enclosure, the collector having, on one side, a large base adjacent to the first lateral face (15; 15') of the matrix and, on the other side, at least one opening connected either to the heat transfer salt inlet orifice (43) of the primary enclosure or to the heat transfer salt outlet orifice (42) of the primary enclosure,
- one or two pumps (41) arranged outside the primary enclosure (20).

7. The reactor according to one of claims 1 to 6, **characterised in that** the matrix (10; 10') is a one-piece matrix.

8. The reactor according to one of claims 1 to 7, **characterised in that** the matrix (10; 10') is made of one or more materials selected from: graphene, silicon carbide foams, graphene and silicon carbide foams, combinations of the preceding materials.

9. The reactor according to one of claims 1 to 8, **characterised in that** the matrix (10; 10') is obtained by 3D printing.

10. The reactor according to claim 3, **characterised in that** the sarcophagus (21) comprises a layer of thorium between the reflective layer (210) and the shield layer (211), which layer of thorium is intended to be fertilised by absorption of the leakage neutrons which escape from the primary enclosure (20) and are slowed down by the reflective layer (210).

11. The reactor according to one of claims 1 to 10, **characterised in that** it comprises:
- a headspace above the matrix (10; 10'),
- a tank for recovering gaseous fission products, connected to the headspace,
- a buffer tank of neutral gas and means for injecting said neutral gas into the headspace for the purpose of compensating for variations in the volume of the fuel salt.

12. The reactor according to one of claims 1 to 11, **characterised in that** a system for preheating by tracing is provided in the heat transfer salt circulation means (40, 41, 45, 46; 50, 41).

13. The reactor according to one of claims 1 to 12, **characterised in that** it comprises a device for monitoring the flow rate of circulation of the heat transfer salt in the reactor.

14. The reactor according to one of claims 1 to 13, **characterised in that** the matrix is a cube with sides of 35 cm to 120 cm and/or whose volume of fuel salt in the liquid state is less than 500 litres.

15. The reactor according to one of claims 1 to 14, **characterised in that** the fuel salt channels (110; 110') and the heat transfer salt channels (120a, 120b; 120') have a dimension comprised between 5 mm and 12 mm in the direction of the thickness of the fuel salt layers and the heat transfer salt layers.

16. The reactor according to claim 4, **characterised in that**:
- the fuel salt channels (110') are rectilinear and through channels, extending from the upper face (13') of the matrix to a lower face (14') of the matrix,
- an upper cavity (200) is provided between the upper face (13') of the matrix and an upper wall of the primary enclosure (20) to house the fuel salt circulation means (30, 31) with the exception of motorisation and control elements of said fuel salt circulation means,
- a lower circulation and homogenisation cavity is provided between the lower face of the matrix (14') and a lower wall of the primary enclosure (20),
- the fuel salt circulation means comprise, on the side of the upper face (13') of the matrix, a central collector (30) and a centrifugal pump (31), the central collector having a large base (32) covering a central portion or a central section (130') of the upper face of the matrix, an inner face (33) in the form of a pyramidal hopper and a top opening (34), the centrifugal pump (31) being configured to propel the fuel salt from the top opening of the central collector towards the peripheral portion or peripheral sections (131') of the upper face of the matrix.

17. The reactor according to claim 4, **characterised in that**:
- each layer of fuel salt channels (11) comprises two U-shaped fuel salt channels (110) arranged symmetrically on either side of a central axis of said layer, each U-shaped fuel salt channel (110) having an outlet end (112) located in a central section (130) of the upper face of the matrix and an inlet end (111) located in a peripheral section (131) of said upper face,
- an upper cavity (200) is provided between the upper face (13) of the matrix and an upper wall of the primary enclosure (20) to house the fuel salt circulation means (30, 31) with the exception of motorisation and control elements of said fuel salt circulation means,
- the fuel salt for circulation means comprise, on the side of the upper face (13) of the matrix, a central collector (30) and a centrifugal pump (31), the central collector having a large base (32) covering a central section (130) of the upper face of the matrix, an inner face (33) in the form of a pyramidal hopper and a top opening (34), the centrifugal pump (31) being configured to propel the fuel salt from the top opening of the central collector towards the peripheral sections (131) of the upper face of the matrix.

18. The reactor according to claim 4, **characterised in that**:
- the heat transfer salt channels (120') are rectilinear and through channels, extending from the first lateral face (15') of the matrix to a second lateral face (16') of the matrix, opposite to the first lateral face, all heat transfer salt channels having an inlet end (121') on the side of the first lateral face (15') of the matrix and an outlet end (122') on the side of the second lateral face (16') of the matrix,
- an upstream brewing cavity is provided between the first lateral face (15') of the matrix and a first lateral wall of the primary enclosure (20),
- a downstream brewing cavity is provided between the second lateral face (16') of the matrix and a second lateral wall of the primary enclosure (20),
- the heat transfer salt inlet orifice of the primary enclosure opens in the upstream brewing cavity, while the heat transfer salt outlet orifice of the primary enclosure opens into the downstream brewing cavity,
- the heat transfer salt circulation means comprise at least one pump (41) external to the primary enclosure (20), configured to inject the heat transfer salt into the upstream brewing cavity via the heat transfer salt inlet orifice of the primary enclosure or to extract the heat transfer salt from the downstream brewing cavity via the heat transfer salt outlet orifice of the primary enclosure.

19. The reactor according to claim 4, **characterised in that**:
- each layer of heat transfer salt channels comprises two U-shaped heat transfer salt channels (120a, 120b) arranged symmetrically on either side of a central axis of said layer, each U-shaped heat transfer salt channel having one end located in a central section (150) of the first lateral face of the matrix and another end located in a peripheral section (151a, 151b) of said first lateral face,
- a single lateral cavity (201) is provided, between the first lateral face (15) of the matrix and a first lateral wall of the primary enclosure (20),
- the heat transfer salt inlet orifice (43, 52) and the heat transfer salt outlet orifice (42, 51) of the primary enclosure are both provided to open into the single lateral cavity (201).

20. The reactor according to claim 19, **characterised in that** the heat transfer salt circulation means comprise an integral collector (50) with integrated conduits, the integral collector having an inner front face (501), an opposite outer front face and four flanks (504-507),
the inner front face (501) forming a pyramidal central hopper (502) extending in front of the central section (150) of the first lateral face of the matrix, and two pyramidal peripheral hoppers (503) extending in front of the two peripheral section (151a, 151b) of the first lateral face of the matrix,
the central hopper being extended by a conduit (508) formed in the thickness of the collector and opening onto a first lateral opening located at one of the flanks (505) of the collector,
the peripheral hoppers (503) each being extended by a secondary conduit (509) formed in the thickness of the collector, which secondary conduits join a main conduit (510) which opens onto a second lateral opening located at one of the flanks (505) of the collector, the first lateral opening of the collector being connected to the heat transfer salt outlet orifice (51) of the primary enclosure, while the second opening of the collector is connected to the heat transfer salt inlet orifice (52) of the primary enclosure, or vice versa.

21. An electrogenerator, **characterised in that** it comprises
- a nuclear fission reactor (100) according to one of claims 1 to 20,
- a secondary heat exchanger (101), supplied with hot heat transfer salt leaving the reactor, and in which the hot heat transfer salt gives off heat to carbon dioxide in the supercritical phase,
- a supercritical CO₂ turbine (103) connected to the outlet of the secondary heat exchanger (101),
- an electric generator (103) coupled or integrated to the supercritical CO₂ turbine,
- an electronic power converter (104).

22. An electrogenerator according to claim 21, **characterised in that** it comprises an outer casing (106) enclosing the nuclear fission reactor (100), the secondary heat exchanger (101), the supercritical CO₂ turbine (103), the electric generator (103) and the electronic power converter (104), the outer casing further containing a computer control unit (105) with telecommunication means allowing remotely controlling the control unit,
and **in that** the outer casing (106) comprises adjustable and motorised ventilation fins (107) which can be pivoted between a closed position in which the outer casing is sealed and an open position allowing air to circulate between the inside and the outside of the casing.
